# FASCICULE DE BREVET EUROPEEN

(11) **EP 4 457 065 B1**
(45) Date de publication et mention de la délivrance du brevet: **17.09.2025**
(21) Numéro de dépôt: 22850661.4
(22) Date de dépôt: 26.12.2022
(51) Int. Cl.: B28B 1/00, B22F 10/18, B22F 10/38, B29C 64/106, B29C 64/386, B33Y 10/00, B33Y 50/02, B33Y 80/00, B29C 64/118, B01D 63/06, B01D 67/00, B01D 69/10, B22F 5/10, B33Y 70/00

(54) **PROCEDE DE FABRICATION D'UN SUPPORT INORGANIQUE DE FILTRATION PAR INTRICATION ET MEMBRANE OBTENUE**
VERFAHREN ZUR HERSTELLUNG EINES ANORGANISCHEN FILTRATIONSMEDIUMS DURCH INEINANDERGREIFENDE UND ERHALTENE MEMBRAN
METHOD FOR PRODUCING AN INORGANIC FILTRATION MEDIUM THROUGH INTERMESHING AND OBTAINED MEMBRANE

(30) Priorité: 30.12.2021 FR 2114668
(43) Date de publication de la demande: 06.11.2024
(73) Titulaire: Technologies Avancees et Membranes Industrielles, 26110 Nyons (FR)
(72) Inventeur: LESCOCHE, Philippe, 26111 NYONS CEDEX (FR); ANQUETIL, Jérôme, 26111 NYONS CEDEX (FR)
(74) Mandataire: Cabinet Beau de Loménie
(86) Numéro de dépôt international: PCT/FR2022/052504
(87) Numéro de publication internationale: WO 2023/126607

(56) Documents cités:
- WO-A1-2020/070033
- WO-A1-2020/109716
- US-A1- 2017 165 917

## Description

### Domaine Technique

La présente invention concerne un procédé de fabrication d'un support inorganique monolithique poreux, pouvant notamment être utilisé pour obtenir une membrane de filtration, et en particulier une membrane de filtration tangentielle. Plus précisément, le support poreux est préparé par une technique procédant par addition de matière.

### Technique antérieure

La membrane de filtration constitue une barrière sélective et permet, sous l'action d'une force de transfert, le passage ou l'arrêt de certains composants du milieu liquide à traiter. Le passage ou l'arrêt des composants peut résulter de leur taille par rapport à la taille des pores de la membrane qui se comporte alors comme un filtre. En fonction de la taille des pores, ces techniques sont nommées microfiltration, ultrafiltration ou nanofiltration.

Une membrane est constituée d'un support poreux sur lequel sont déposées une ou plusieurs couches de séparation. De manière classique, le support est d'abord mis en forme par extrusion. Le support subit ensuite un frittage de manière à obtenir la solidité requise, tout en conservant une texture poreuse ouverte et interconnectée. Ce procédé contraint à l'obtention de canaux rectilignes à l'intérieur desquels la ou les couches séparatrices sont ensuite déposées et frittées. La membrane ainsi réalisée subit donc au minimum deux opérations de frittage. Les liants organiques ajoutés lors de la préparation de la pâte, avant son extrusion, brûlent en totalité pendant le frittage du support.

La Demanderesse a décrit dans la demande FR 3 006 606 la préparation d'une membrane de filtration dont le support poreux est réalisé par une technique additive, par répétition de dépôt d'un lit continu de poudre suivi d'une consolidation localisée selon un motif prédéterminé. Cette technique permet de préparer des membranes de filtration résistantes mécaniquement et adaptées à une utilisation en filtration tangentielle. Cependant, cette technique a l'inconvénient de nécessiter d'ajuster la fluidité de la poudre pour permettre son parfait écoulement lors du dépôt du lit de poudre. De plus, cette technique impose d'enlever la poudre non consolidée, pour éventuellement aussi la recycler, ce qui peut s'avérer délicat, long et onéreux, notamment lorsque ladite poudre non consolidée est présente dans des canaux non rectilignes du support poreux.

La demanderesse a également proposé par les demandes de brevet WO2020/109715 et WO2020/109716, ce dernier divulguant un procédé de fabrication d'au moins un support inorganique monolithique poreux suivant le préambule de la revendication 1, des nouveaux procédés de préparation d'un support poreux qui ne présentent pas les inconvénients de l'art antérieur, et en particulier qui sont rapides, faciles de mise en œuvre, qui permettent d'obtenir un support poreux résistant mécaniquement et dont la forme, et notamment celle des canaux non rectilignes, est aisément variée. Le support poreux obtenu est homogène, résistant mécaniquement et a une porosité adaptée à une utilisation en filtration, c'est-à-dire une porosité comprise entre 10 et 60% et qui est ouverte et interconnectée avec un diamètre moyen des pores allant de 0,5 µm à 50 µm.

Pour cela, les procédés utilisent une machine d'impression 3D comportant une tête d'extrusion montée mobile dans l'espace par rapport et au-dessus d'un plateau horizontal fixe. Une composition inorganique sort de la tête d'extrusion sous la forme d'un ruban de matière ou cordon permettant de bâtir, à partir d'un modèle 3D numérique, une structure tridimensionnelle crue manipulable destinée à former le ou les supports inorganiques poreux monolithiques. La structure tridimensionnelle crue manipulable est soumise ensuite à une étape de frittage.

Comme expliqué dans ces demandes de brevets, la structure tridimensionnelle crue manipulable est obtenue à partir de la superposition de strates correspondant chacune à un ensemble de cordons continus ou discontinus, juxtaposés ou non juxtaposés, qui sont extrudés à une même altitude suivant le modèle 3D numérique. Les différentes strates peuvent être empilées selon l'axe vertical de différentes manières.

Dans l'état de la technique, il est également connu par la demande de brevet WO 2020/109716, un procédé de fabrication d'un objet 3D au moyen d'une modélisation, par dépôt d'un fil en fusion dans lequel un chemin par chevauchement est réalisé. De même, la demande de brevet US 2017/165917 décrit un procédé de fabrication d'un objet 3D au moyen d'une modélisation, mettant en œuvre deux buses de dépôt de matière contrôlées pour créer notamment un croisement entre les deux cordons de matière.

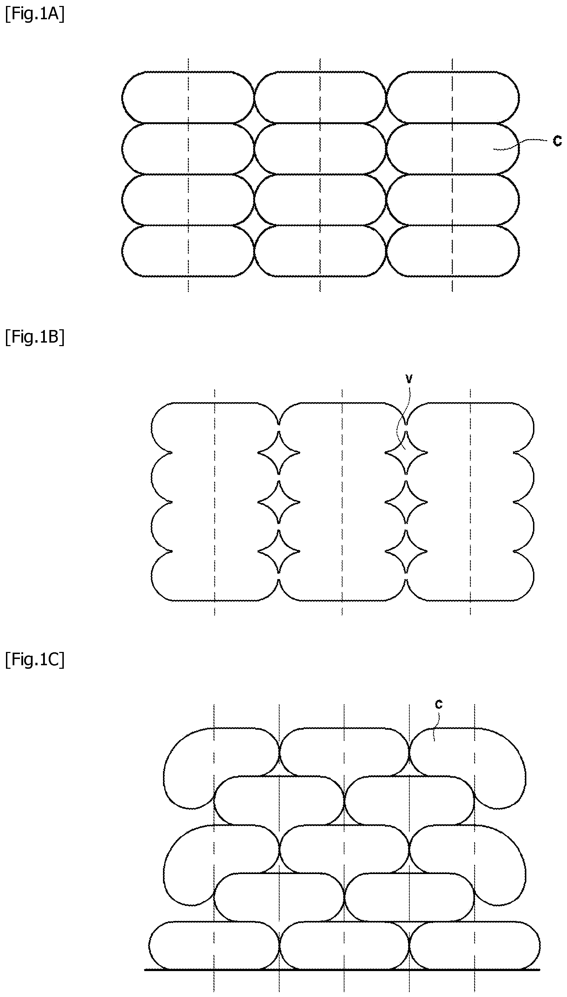

La déposante a ainsi envisagé de réaliser les strates par des empilements verticaux de dépôts de cordons de matière c contigus comme illustré sur la figure 1A. La déposante a constaté qu'après l'opération de frittage (figure 1B), une telle structure contenait des vides de matière v qui étaient aptes à présenter une taille supérieure à celle des pores, et qui étaient à même de réduire la résistance mécanique du support poreux.

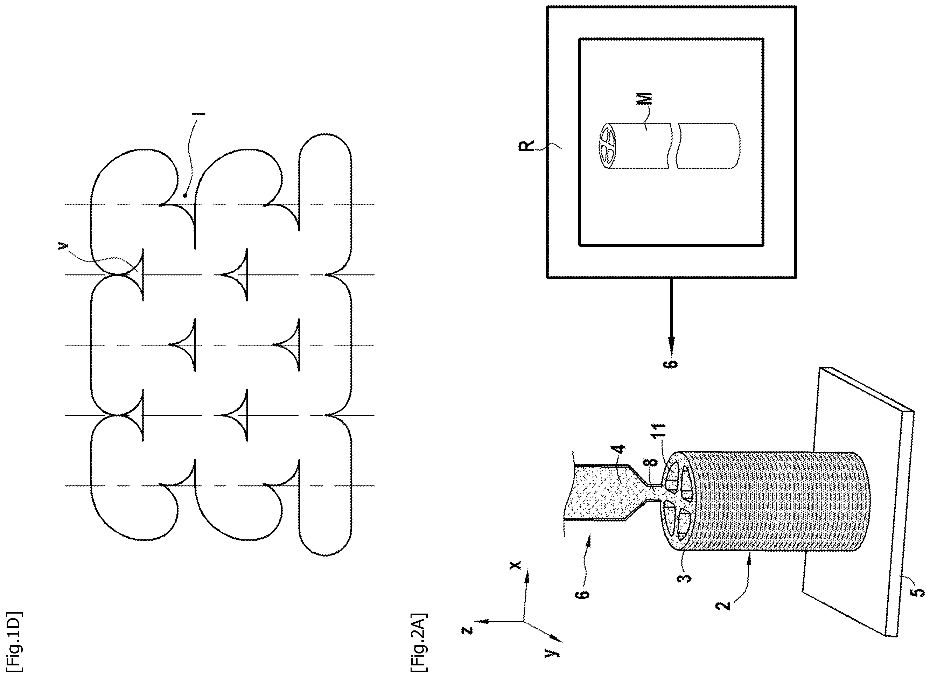

La déposante a aussi envisagé de réaliser les strates par des dépôts de cordons de matière c disposés en quinconce comme illustré à la figure 1C. Cette solution n'apporte rien vis-à-vis de l'élimination des espaces vides v résiduels entre les cordons de matière. Après l'opération de frittage (figure 1D), la structure présente encore des vides internes de matière v. De plus, cette solution détériore la qualité des surfaces latérales puisqu'une strate sur deux présente une lacune conduisant à l'affaissement du dépôt de matière de la strate supérieure.

### Exposé de l'invention

L'objet de l'invention vise justement à remédier aux inconvénients de l'état de la technique, en proposant un nouveau procédé de fabrication d'un support inorganique monolithique poreux, conçu pour éviter de créer des espaces vides de matière susceptibles de réduire la résistance mécanique du support poreux.

Un autre objet de l'invention est de proposer un procédé de fabrication d'une structure tridimensionnelle, conçu pour pouvoir maîtriser les dimensions de cette structure tridimensionnelle et en particulier le profil des parois de cette structure tridimensionnelle.

Un autre objet de l'invention est de proposer un procédé de fabrication d'une structure tridimensionnelle pourvue d'au moins un canal de circulation d'un milieu fluide à traiter, possédant une paroi adaptée pour le dépôt de couches de séparation.

Un autre objet de l'invention est de proposer un procédé de fabrication d'une structure tridimensionnelle pourvue d'au moins un canal de circulation d'un milieu fluide à traiter, possédant une paroi présentant une succession ininterrompue de reliefs arrondis générant des variations de la section de passage du canal, tout en évitant l'apparition de pertes de charges rédhibitoires.

Pour atteindre ces objectifs, l'invention concerne un procédé de fabrication d'au moins un support inorganique monolithique poreux possédant au moins un canal pour la circulation du fluide à traiter et ayant une porosité comprise entre 10% et 60% et un diamètre moyen de pores appartenant à la gamme allant de 0,5 µm à 50 µm, à l'aide d'une machine d'impression 3D comportant au moins une tête d'extrusion montée mobile dans l'espace au-dessus d'un plateau horizontal fixe, en étant déplacée successivement avec une hauteur nominale selon une trajectoire numérique prédéfinie pour effectuer des dépôts de matière en superposition présentant chacun une largeur nominale et une épaisseur définie entre une surface inférieure et une surface supérieure, ladite machine d'impression 3D permettant le dépôt de matière sous la forme
- d'un cordon à bords arrondis de manière à créer à la paroi d'au moins un canal de circulation, des reliefs périmétriques arrondis participant à la génération de turbulences,
- d'une composition pour bâtir, sur ledit plateau horizontal, à partir de la trajectoire numérique prédéfinie, des parois d'une structure tridimensionnelle crue manipulable destinée à former le ou les supports inorganiques poreux monolithiques, le procédé consistant:
   - Pour une paroi dont la largeur est supérieure à la largeur nominale du dépôt de matière, à décomposer la trajectoire numérique exclusivement en des chemins avec chevauchement et en des chemins avec croisement ;
   - À alimenter la tête d'extrusion de la machine d'impression 3D avec une composition,
   - À piloter la tête d'extrusion selon la trajectoire numérique afin que :
      * pour un chemin avec chevauchement, la matière en cours de dépôt chevauche partiellement au moins un bord d'un dépôt de matière antérieurement déposé, par une partie de matière chevauchante présentée dans son épaisseur et ayant une épaisseur strictement inférieure à la hauteur nominale de manière à éviter dans la partie interne de la structure tridimensionnelle crue manipulable, des espaces entre les bords arrondis du dépôt de matière en cours et ceux du dépôt de matière antérieurement déposé,
      * pour un chemin avec croisement, la matière en cours de dépôt croise au moins un dépôt de matière antérieurement déposé avec un chevauchement complet dudit dépôt de matière antérieurement déposé, par une partie de matière chevauchante présentée dans son épaisseur et ayant une épaisseur strictement inférieure à la hauteur nominale de manière à éviter dans la partie interne de la structure tridimensionnelle crue manipulable, des espaces entre les bords arrondis du dépôt de matière en cours et ceux du dépôt de matière antérieurement déposé.

Selon une caractéristique avantageuse de réalisation, la tête d'extrusion est montée mobile selon la trajectoire numérique prédéfinie pour effectuer une succession de tours correspondant chacun au chemin parcouru pour retrouver une même position dans le plan horizontal avec une élévation correspondant à une hauteur nominale.

Selon une autre caractéristique avantageuse de réalisation, on pilote la tête d'extrusion afin que sur au moins un tour, la tête d'extrusion s'élève au moins une fois d'une hauteur intermédiaire qui est une fraction de la hauteur nominale.

Selon une autre caractéristique de l'invention, on pilote la tête d'extrusion afin que sur au moins un tour, la tête d'extrusion se trouve positionnée en différents points du chemin en s'élevant en chaque point d'un incrément de hauteur dont la somme correspond à la hauteur nominale.

Avantageusement, on pilote la tête d'extrusion afin que par la succession de tours, la tête d'extrusion s'élève pour bâtir la structure tridimensionnelle crue manipulable conforme au modèle 3D numérique, en suivant une trajectoire avec un dépôt de matière ininterrompu du début jusqu'au terme de la construction de la structure tridimensionnelle crue manipulable.

Selon une caractéristique avantageuse, on pilote la tête d'extrusion afin qu'au cours de chaque tour, la tête d'extrusion est décalée dans le plan horizontal afin que la matière en cours de dépôt chevauche partiellement un bord d'un dépôt de matière antérieurement déposé.

Pour un chemin avec croisement, on pilote la tête d'extrusion pour réduire la quantité de matière déposée pour réaliser la partie de matière chevauchante ayant une épaisseur strictement inférieure à la hauteur nominale.

Pour un chemin avec un même chevauchement, on pilote la tête d'extrusion pour conserver constant le débit de matière déposée.

Pour un chemin avec chevauchement, on pilote la tête d'extrusion pour régler sa position dans le plan pour définir le degré de chevauchement de la partie de matière chevauchante sur le dépôt de matière antérieurement déposé.

Pour un chemin avec chevauchement, on règle le débit de la tête d'extrusion en fonction du degré de chevauchement de la partie de matière chevauchante sur le dépôt de matière antérieurement déposé.

Typiquement, la tête d'extrusion est montée mobile selon la trajectoire numérique prédéfinie pour effectuer des dépôts de matière en superposition par strates s'élevant chacune d'une hauteur nominale.

Selon une autre caractéristique de l'invention, la tête d'extrusion est pilotée afin de ménager dans la structure tridimensionnelle crue manipulable, au moins un canal de circulation d'un milieu fluide à traiter, possédant une paroi présentant une succession de reliefs arrondis générant des variations de la section de passage du canal, ces reliefs arrondis étant formés par la partie de matière située à l'opposé de la partie de matière chevauchante.

Selon une autre caractéristique, les paramètres d'extrusion sont ajustés et la tête d'extrusion est configurée de sorte que la partie de matière située à l'opposé de la partie de matière chevauchante, possède un bord arrondi.

Classiquement, on dispose dans un four de traitement thermique la structure tridimensionnelle crue manipulable afin d'y réaliser une opération de frittage.

Un autre objet de l'invention est de proposer un procédé de préparation d'une membrane de filtration tangentielle comprenant la fabrication d'un support inorganique monolithique poreux dans lequel est ménagé au moins un canal de circulation du milieu fluide à traiter, suivie, après le frittage dudit support, d'une étape de création d'au moins une couche séparatrice sur les parois du ou des canaux.

Un autre objet de l'invention est de fournir un support inorganique monolithique poreux fabriqué selon le procédé conforme à l'invention et possédant une surface extérieure présentant une succession de reliefs périmétriques arrondis et un canal de circulation dont la paroi présente des reliefs périmétriques arrondis participant à la génération de turbulences.

Un autre objet de l'invention est de proposer une membrane de filtration tangentielle comportant un support inorganique monolithique poreux pourvu d'au moins un canal de circulation du milieu fluide à traiter, dont la paroi avec des reliefs périmétriques arrondis est revêtue d'au moins une couche séparatrice.

### Brève description des dessins

[Fig. 1A] La figure 1A est une vue en coupe d'une paroi réalisée par l'empilement vertical de dépôts de cordons de matière faisant apparaitre des espaces vides.
[Fig. 1B] La figure 1B est une vue de la paroi illustrée à la figure 1A montrant la persistance d'espaces vides.
[Fig. 1C] La figure 1C est une vue en coupe d'une paroi réalisée par l'empilement vertical en quinconce de dépôts de cordons de matière faisant apparaitre des espaces vides.
[Fig. 1D] La figure 1D est une vue de la paroi illustrée à la figure 1C après l'opération de frittage et montrant la persistance d'espaces vides.
[Fig. 2A] La figure 2A est une vue schématique d'une machine d'impression 3D permettant la mise en œuvre de l'invention.
[Fig. 2B] La figure 2B est une vue en perspective d'un exemple de réalisation d'une structure crue tridimensionnelle manipulable.
[Fig. 3] La figure 3 est une vue schématique de dessus montrant le dépôt de matière en mode conventionnel pour réaliser une paroi tubulaire de largeur égale à la largeur nominale d'un dépôt de matière.
[Fig. 3A] La figure 3A est une vue en coupe prise sensiblement selon les lignes A-A de la figure 3 montrant les dépôts de matière successifs en mode conventionnel pour réaliser une paroi tubulaire.
[Fig. 4] La figure 4 est une vue schématique de dessus montrant le dépôt de matière en mode vase pour réaliser une paroi tubulaire de largeur égale à la largeur nominale d'un dépôt de matière.
[Fig. 4A] La figure 4A est une vue en coupe prise sensiblement selon les lignes A-A de la figure 4 montrant les dépôts de matière successifs en mode vase pour réaliser une paroi tubulaire.
[Fig. 5] La figure 5 est une vue schématique de dessus montrant le principe conforme à l'invention des dépôts de matière pour un chemin avec chevauchement de la tête d'extrusion.
[Fig. 5A] La figure 5A est une vue en coupe prise sensiblement selon les lignes A-A de la figure 5 montrant le chevauchement des dépôts de matière pour un chemin avec chevauchement de la tête d'extrusion.
[Fig. 6] La figure 6 est une vue schématique de dessus montrant des dépôts de matière pour un chemin avec croisement de la tête d'extrusion.
[Fig. 6A] La figure 6A est une vue en coupe prise sensiblement selon les lignes A-A de la figure 6 montrant le chevauchement conformément à l'invention, des dépôts de matière pour un chemin avec croisement de la tête d'extrusion.
[Fig. 6B] La figure 6B est une vue en coupe prise sensiblement selon les lignes B-B de la figure 6 montrant le chevauchement conformément à l'invention, des dépôts de matière pour un chemin avec croisement de la tête d'extrusion.
[Fig. 7] La figure 7 est une vue schématique de dessus montrant une étape du principe du dépôt de matière en mode vase séquentiel pour réaliser une paroi tubulaire de largeur supérieure à la largeur nominale d'un dépôt de matière.
[Fig. 7A] La figure 7A est une vue en coupe prise sensiblement selon les lignes A-A de la figure 7 montrant une étape du principe du dépôt de matière en mode vase séquentiel pour réaliser une paroi tubulaire de largeur supérieure à la largeur nominale d'un dépôt de matière.
[Fig. 7B] La figure 7B est une vue schématique de dessus montrant le parcours du dépôt de matière en mode vase séquentiel pour réaliser une paroi tubulaire de largeur supérieure à la largeur nominale d'un dépôt de matière.
[Fig. 8] La figure 8 est une vue schématique de dessus montrant une autre étape du principe du dépôt de matière en mode vase séquentiel pour réaliser une paroi tubulaire de largeur supérieure à la largeur nominale d'un dépôt de matière.
[Fig. 8A] La figure 8A est une vue en coupe prise sensiblement selon les lignes A-A de la figure 8 montrant une autre étape du principe du dépôt de matière en mode vase séquentiel pour réaliser une paroi tubulaire de largeur supérieure à la largeur nominale d'un dépôt de matière.
[Fig. 8B] La figure 8B est une vue schématique de dessus montrant le parcours du dépôt de matière en mode vase séquentiel pour réaliser une paroi tubulaire de largeur supérieure à la largeur nominale d'un dépôt de matière.
[Fig. 8C] La figure 8C est une vue en montrant une autre étape du principe du dépôt de matière en mode vase séquentiel pour réaliser une paroi tubulaire de largeur supérieure à la largeur nominale d'un dépôt de matière.
[Fig. 9] La figure 9 est une vue schématique de dessus montrant une étape du principe du dépôt de matière en mode vase continu pour réaliser une paroi tubulaire de largeur supérieure à la largeur nominale d'un dépôt de matière.
[Fig. 9A] La figure 9A est une vue en coupe prise sensiblement selon les lignes A-A de la figure 9 montrant une étape du principe du dépôt de matière en mode vase continu pour réaliser une paroi tubulaire de largeur supérieure à la largeur nominale d'un dépôt de matière.
[Fig. 9B] La figure 9B est une vue schématique de dessus montrant le parcours du dépôt de matière en mode vase continu pour réaliser une paroi tubulaire de largeur supérieure à la largeur nominale d'un dépôt de matière.
[Fig. 10] La figure 10 est une vue schématique de dessus montrant une autre étape du principe du dépôt de matière en mode vase continu pour réaliser une paroi tubulaire de largeur supérieure à la largeur nominale d'un dépôt de matière.
[Fig. 10A] La figure 10A est une vue en coupe prise sensiblement selon les lignes A-A de la figure 10 montrant une autre étape du principe du dépôt de matière en mode vase continu pour réaliser une paroi tubulaire de largeur supérieure à la largeur nominale d'un dépôt de matière.
[Fig. 10B] La figure 10B est une vue schématique de dessus montrant le parcours du dépôt de matière en mode vase continu pour réaliser une paroi tubulaire de largeur supérieure à la largeur nominale d'un dépôt de matière.
[Fig. 10C] La figure 10C est une vue montrant une autre étape du principe du dépôt de matière en mode vase continu pour réaliser une paroi tubulaire de largeur supérieure à la largeur nominale d'un dépôt de matière.
[Fig. 11] La figure 11 est un schéma permettant d'illustrer un exemple d'un parcours de la tête d'extrusion pour le procédé appelé « mode vase séquentiel » et pour le procédé appelé « mode vase continu ».
[Fig. 12A] La figure 12A est une vue de dessus montrant un autre exemple de réalisation d'une paroi délimitant deux canaux contigus et présentant une largeur supérieure à deux fois la largeur nominale d'un dépôt de matière.
[Fig. 12B] La figure 12B est une vue en coupe prise sensiblement selon les lignes B-B de la figure 12A.
[Fig. 13A] La figure 13A est une vue en coupe montrant le dépôt de matière réalisé selon un procédé de l'art antérieur, pour un chemin avec un croisement, avant le franchissement du croisement.
[Fig. 13B] La figure 13B est une vue en coupe montrant le dépôt de matière réalisé selon un procédé de l'art antérieur, pour un chemin avec un croisement, lors du franchissement du croisement.
[Fig. 13C] La figure 13C est une vue en coupe montrant le dépôt de matière réalisé selon un procédé de l'art antérieur, pour un chemin avec un croisement, après le franchissement du croisement.
[Fig. 13D] La figure 13D est une vue en coupe montrant le dépôt de matière réalisé selon un procédé de l'art antérieur, pour un chemin avec un croisement, et venant en superposition du dépôt de matière préalablement réalisé.
[Fig. 13E] La figure 13E est une vue en coupe montrant le dépôt de matière réalisé selon un procédé de l'art antérieur, pour un chemin avec un croisement, venant en superposition du dépôt de matière préalablement réalisé et montrant la création d'espaces vides au niveau du croisement des dépôts de matière.
[Fig. 14] La figure 14 est une vue en coupe montrant un exemple d'un mode de réalisation selon l'invention avec dépôts de matière réalisés en superposition par strates conformément au principe de l'invention.
[Fig. 15] La figure 15 est une image vue en coupe oblique, d'un support inorganique monolithique poreux à huit canaux de filtration montrant l'absence d'espaces vides.
[Fig. 16] La figure 16 est une image vue en coupe droite, d'une membrane de filtration tangentielle comportant un support inorganique monolithique poreux à huit canaux dont la paroi des canaux avec des reliefs périmétriques arrondis est revêtue d'une couche séparatrice.

### Description des modes de réalisation

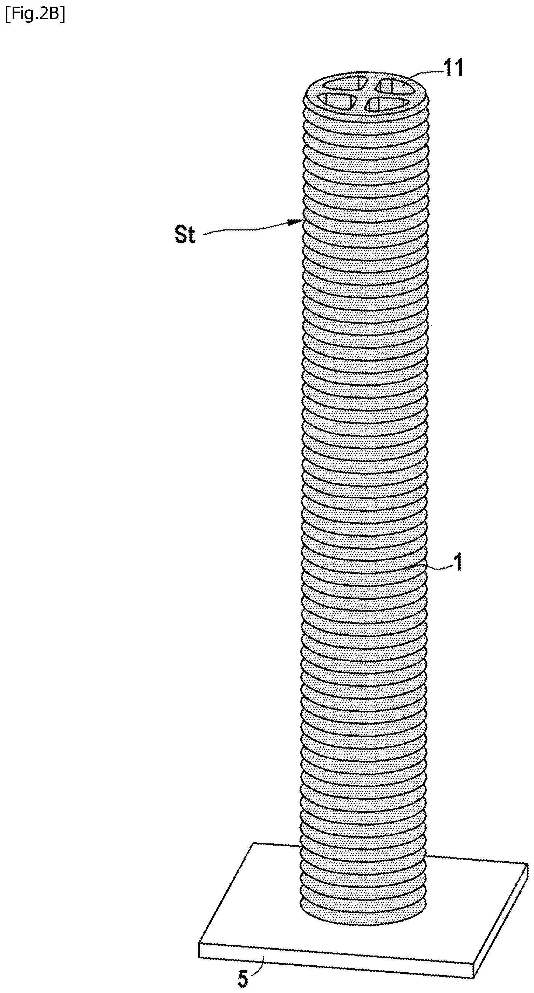

L'objet de l'invention concerne la fabrication d'un support inorganique monolithique poreux 1 (figure 2B) destiné à constituer un élément de séparation par flux tangentiel d'un milieu liquide à traiter en un filtrat (ou perméat) et un rétentat, communément appelé membrane de filtration tangentielle.

Dans de nombreuses applications, de tels supports poreux possèdent une géométrie tubulaire et comportent au moins un canal ou chemin de circulation pour le fluide à filtrer, pourvu d'au moins une couche séparatrice. Ces canaux de circulation présentent une entrée et une sortie. En général, l'entrée des canaux de circulation est positionnée à l'une des extrémités du support poreux, cette extrémité jouant le rôle de zone d'entrée pour le milieu fluide à traiter et leur sortie est positionnée à une autre extrémité du support poreux jouant le rôle de zone de sortie pour le rétentat. La zone d'entrée et la zone de sortie sont reliées par une zone périphérique continue au niveau de laquelle le perméat est récupéré.

Dans d'autres applications, les supports poreux peuvent se présenter sous la forme d'un bloc par exemple de forme parallélépipédique dans lequel sont aménagés au moins un canal ou chemin de circulation pour le fluide à filtrer, pourvu d'au moins une couche séparatrice. Le perméat est récupéré en périphérie du bloc ou à l'aide d'un circuit de collecte aménagé dans le bloc. Dans les exemples illustrés, le support poreux possède une géométrie tubulaire mais il est clair que l'objet de l'invention peut s'appliquer à des supports poreux de toutes formes.

Quand la porosité (le diamètre moyen de pores) du support fritté est adaptée au milieu fluide à traiter (seuil de filtration) ledit support fritté est directement utilisable en filtration et est désigné par auto-membrane ou membrane homogène.

Quand la porosité du support fritté n'est pas adaptée au milieu fluide à traiter (pores de trop grande dimension par rapport au seuil de filtration nécessaire), les parois du ou des canaux de circulation sont alors continument recouvertes par au moins une couche séparatrice qui assure la filtration du milieu fluide à traiter. La ou les couches séparatrices sont poreuses et ont un diamètre moyen de pores inférieur à celui du support. La couche séparatrice peut être soit déposée directement sur le support poreux (cas d'une couche de séparation monocouche), ou encore sur une couche intermédiaire de diamètre moyen de pores moindre, elle-même déposée directement sur le support poreux (cas d'une couche de séparation multicouche). Ainsi, une partie du milieu fluide à filtrer traverse la ou les couches séparatrices et le support poreux, de sorte que cette partie traitée du fluide, appelée perméat, s'écoule par la surface périphérique extérieure du support poreux. Les couches séparatrices délimitent la surface de la membrane de filtration destinée à être en contact avec le fluide à traiter et au contact de laquelle circule le fluide à traiter.

La porosité du support inorganique monolithique 1 est ouverte, c'est-à-dire qu'elle forme un réseau de pores interconnectés dans les trois dimensions, ce qui permet au fluide filtré par la ou les couches séparatrices de traverser le support poreux et d'être récupéré en périphérie. Le perméat est donc récupéré sur la surface périphérique du support poreux.

Le support inorganique monolithique poreux 1 a un diamètre moyen de pores appartenant à la gamme allant de 0,5 µm à 50 µm. La porosité du support inorganique monolithique poreux 1 est comprise entre 10 et 60%, de préférence entre 20 et 50%.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales l'aire située sous la courbe des fréquences obtenue par pénétration de mercure. En particulier, on pourra utiliser la technique décrite dans la norme ISO 15901-1 :2005 pour ce qui concerne la technique de mesure par pénétration de mercure.

La porosité du support, qui correspond au volume total des vides interconnectés (pores) présents dans la matière considérée, est une grandeur physique comprise entre 0 et 1 ou entre 0% et 100%. Elle conditionne les capacités d'écoulement et de rétention dudit corps poreux. Pour que le matériau puisse être utilisé en filtration, la porosité ouverte interconnectée totale doit être au minimum de 10% pour un débit satisfaisant de filtrat à travers le support, et au maximum de 60% afin de garantir une résistance mécanique du support poreux adaptée.

La porosité d'un corps poreux peut être mesurée en déterminant le volume d'un liquide contenu dans ledit corps poreux en pesant ledit matériau avant et après un séjour prolongé dans ledit liquide (eau ou autre solvant). Connaissant les masses volumiques respectives du matériau considéré et du liquide utilisé, la différence massique, convertie en volume, est directement représentative du volume des pores et donc de la porosité ouverte totale du corps poreux.

D'autres techniques permettent de mesurer précisément la porosité ouverte totale d'un corps poreux parmi lesquelles on peut citer :
- la porosimétrie par intrusion de mercure (norme ISO 15901-1 précitée) : injecté sous pression, le mercure remplit les pores accessibles aux pressions mises en œuvre, et le volume de mercure injecté correspond alors au volume des pores,
- la diffusion aux petits angles : cette technique, qui utilise soit un rayonnement de neutrons, soit des rayons X, donne accès à des quantités physiques moyennées sur l'échantillon entier. La mesure consiste en l'analyse de la distribution angulaire de l'intensité diffusée par l'échantillon,
- l'analyse d'images 2D obtenues par microscopie,
- l'analyse d'images 3D obtenues par tomographie de rayons X.

De plus, le support inorganique monolithique poreux 1 a une résistance mécanique adaptée à une utilisation en filtration tangentielle. Plus précisément, le support inorganique monolithique poreux 1 supporte une pression interne d'au moins 10 bars sans éclatement, et de préférence au moins 30 bars sans éclatement et avantageusement au moins 50 bars sans éclatement. Une pression d'éclatement correspond, selon l'invention, à la pression à laquelle un support dont on a préalablement obstrué la porosité (avec une matière thermo-fusible comme par exemple de la paraffine) éclate sous l'effet d'une surpression interne par rapport à la pression extérieure au support, cette surpression étant appliquée dans les canaux avec de l'eau, la pression extérieure au support étant la pression atmosphérique.

Tel que cela ressort plus précisément de la figure 2A, le support inorganique monolithique poreux 1 selon l'invention est préparé par le frittage d'une structure tridimensionnelle crue manipulable 2, qui est construite conformément à un modèle 3D numérique M par la superposition de dépôts de matière 3 relevant d'une composition 4 au sens général. Des dépôts de matière sont réalisés à l'aide d'une machine d'impression tridimensionnelle comportant notamment un plateau horizontal 5, éventuellement amovible, au-dessus duquel est disposée au moins une tête d'extrusion 6.

Par « structure tridimensionnelle crue » 2, on entend une structure tridimensionnelle obtenue à partir de la superposition de dépôts d'une composition 4 et n'ayant pas encore subi de frittage. La forme et les dimensions de cette structure crue sont déterminées niveau par niveau, par le modèle 3D numérique M, comme cela sera expliqué en détail dans la suite de la description. Le modèle 3D numérique M est déterminé par un logiciel de conception par ordinateur, afin de construire la structure tridimensionnelle crue 2.

Cette structure tridimensionnelle crue 2 est qualifiée de « manipulable » car elle ne se déforme pas sous son propre poids, et peut même présenter des dévers, grâce à une consolidation accélérée qui lui confère une rigidité mécanique stable dans le temps, comme cela sera expliqué par la suite. Cette structure tridimensionnelle crue 2 peut ainsi être détachée du plateau horizontal 5 pour être déplacée sans déformation ni brisure, pour notamment subir ultérieurement une opération de traitement thermique nécessaire pour obtenir un support poreux monolithique conforme à l'invention.

La tête d'extrusion 6 de la machine d'impression tridimensionnelle est supportée par un mécanisme de déplacement (non représenté sur les figures), tel qu'un robot, permettant son déplacement selon au moins trois axes (x, y et z). Ainsi, la tête d'extrusion 6 peut être déplacée selon un plan horizontal (axes x et y) et verticalement (axe z), grâce au mécanisme de déplacement qui est piloté par un ordinateur R de tous types connus en soi. Cet ordinateur R commande les mouvements du système de déplacement et par suite de la tête d'extrusion 6, selon une trajectoire prédéterminée en fonction du modèle 3D numérique M à partir duquel est réalisée la structure tridimensionnelle crue 2 qui permet d'obtenir le support inorganique monolithique poreux 1 après une opération de traitement thermique.

La tête d'extrusion 6 comporte une entrée pour la composition 4 (non représentée sur les figures). Tel que cela est représenté dans les figures, la tête d'extrusion 6 comporte également une buse d'extrusion comportant un orifice d'écoulement 8 calibré, à partir duquel sort la composition 4. La tête d'extrusion 6 et par suite également, la buse d'extrusion avec son orifice d'écoulement 8 qui est solidaire de la tête d'extrusion 6 sont mobiles selon ledit modèle 3D numérique M. Selon le procédé de l'invention, la composition 4 est introduite dans la tête d'extrusion 6 de la machine par une entrée afin d'alimenter l'orifice d'écoulement 8. Une action mécanique peut être appliquée pour introduire la composition 4 dans la tête 6 par cette entrée.

Dans le cadre de l'invention, on entend par « action mécanique » l'application d'une pression par tout moyen technique connu, comme par exemple un piston, une pompe ou une vis d'extrusion. Cette étape peut être réalisée de manière usuelle par l'homme du métier et ne sera pas détaillée ici. La matière sort de l'orifice d'écoulement 8 grâce à une certaine pression supérieure à la pression atmosphérique. Il s'ensuit une force qui s'exerce verticalement sur la matière du haut vers le bas au moment de l'extrusion et qui participe à l'écrasement de la matière entre la buse d'extrusion et la matière durcie sous-jacente.

L'orifice d'écoulement 8 est placé en vis-à-vis et à proximité du plateau horizontal 5. L'orifice d'écoulement 8 est mobile, verticalement (i.e. selon l'axe z) et horizontalement (i.e. selon les axes x et y), par rapport au plateau horizontal 5 qui est fixe. Le déplacement vertical et/ou horizontal de l'orifice d'écoulement 8 par rapport au plateau horizontal fixe 5 permet la construction selon le modèle 3D numérique M de la structure tridimensionnelle crue manipulable 2 en appui sur le plateau horizontal 5 suite à l'extrusion d'un cordon de matière au travers de l'orifice d'écoulement 8.

Selon le mode de réalisation illustré sur les figures, la tête d'extrusion 6 est munie d'un orifice d'écoulement 8 de section circulaire. Lorsque l'orifice d'écoulement 8 est de section circulaire, son diamètre va avantageusement de 0,1 mm à 10 mm, de préférence de 0,1 mm à 1 mm et préférentiellement de 0,2 à 0,8 mm.

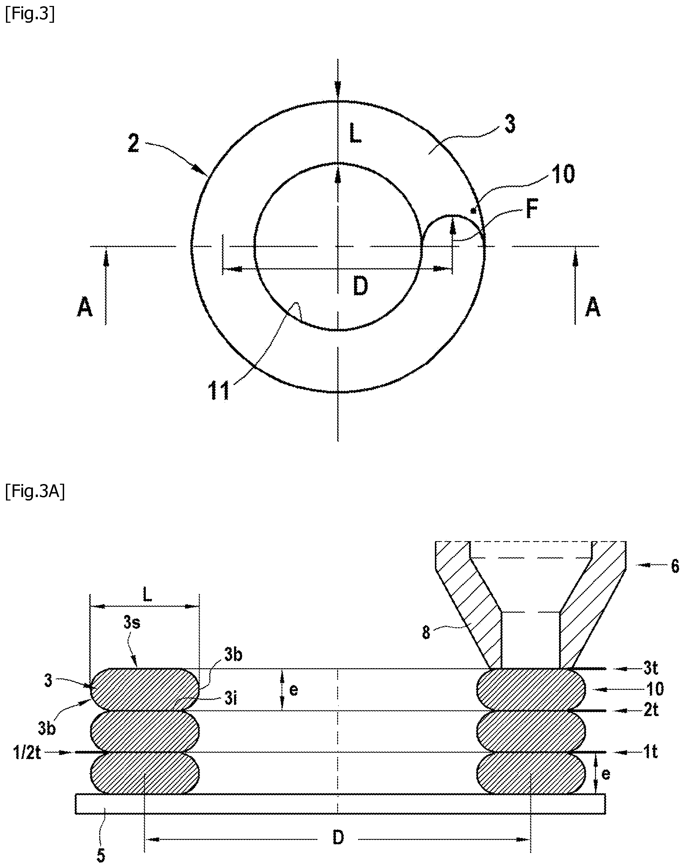

Il est rappelé qu'à un débit d'extrusion prédéfini E (déterminé par exemple par la vitesse de rotation de la vis d'extrusion), une vitesse de déplacement F prédéfinie de la tête d'extrusion 6 et une hauteur nominale e de déplacement de la tête d'extrusion 6 correspond un dépôt de matière 3 avec une largeur nominale L de sorte que L=f(E, F, e). Le dépôt de matière 3 possède une section droite avec une hauteur nominale e définie entre une surface supérieure 3s sensiblement plane et une surface inférieure 3i sensiblement plane reliées entre elles de part et d'autre par deux bords 3b de forme arrondie (figures 3 et 3A). La largeur nominale L du dépôt de matière 3 peut donc être réglée ou modifiée en fonction de la vitesse de déplacement F et/ou du débit d'extrusion de la tête d'extrusion 6.

La tête d'extrusion 6 est alimentée par une composition 4 se présentant par exemple sous la forme d'une pâte comme décrit par exemple par le document PCT/FR2019/052807 ou sous la forme d'un filament ou de granulés comme décrit par le document PCT/FR2019/052808. Avantageusement, la composition 4 est une composition inorganique typiquement de nature céramique et/ou métallique.

La composition céramique est composée d'une phase inorganique solide pulvérulente et d'une matrice.

La phase inorganique solide pulvérulente de la composition céramique comprend un ou plusieurs matériaux inorganiques solides, chacun sous la forme de particules de diamètre moyen compris entre 0,1 µm et 150 µm.

La notion de diamètre moyen est associée à celle de distribution de particules. En effet, les particules d'une poudre sont rarement de taille unique ou monodisperse et une poudre est donc le plus souvent caractérisée par une distribution de tailles de ses particules. Le diamètre moyen correspond alors à la moyenne d'une distribution des tailles des particules. La distribution peut être représentée de différentes manières, comme par exemple une distribution en fréquence ou cumulée. Certaines techniques de mesure donnent directement une distribution basée sur le nombre (microscopie) ou sur la masse (tamisage). Le diamètre moyen est une mesure de la tendance centrale.

Parmi les tendances centrales les plus utilisées on trouve ainsi le mode, la médiane et la moyenne. Le mode est le diamètre le plus fréquent dans une distribution : il correspond au maximum de la courbe de fréquence. La médiane représente la valeur d'où la fréquence totale des valeurs au-dessus et au-dessous est identique (autrement dit, on trouve le même nombre ou volume total de particules au-dessous de la médiane, qu'au-dessus). La moyenne doit quant à elle être calculée et elle détermine le point où les moments de la distribution sont égaux. Pour une distribution normale, le mode, la moyenne et la médiane coïncident, alors qu'ils diffèrent dans le cas d'une distribution non-normale.

Le diamètre moyen des particules constitutives d'une poudre inorganique peut être mesuré notamment par :
- diffraction de lumière laser pour des particules allant de 3 mm à environ 0,1 µm ;
- sédimentation/centrifugation ;
- diffusion dynamique de la lumière (en anglais, "dynamic light scattering (DLS)" pour des particules allant de 0,5 µm à 2 nm ;
- analyse d'images obtenues par microscopie ;
- diffraction de rayons X aux petits angles.

Par granularité de la phase inorganique solide pulvérulente, on entend les dimensions des particules composant la phase inorganique solide pulvérulente. La granularité est caractérisée par la notion de diamètre moyen qui est décrite ci-dessus.

Le plus souvent, la composition céramique comprend en tant que matériau(x) céramique(s) pulvérulent(s), seul ou en mélange, un oxyde et/ou un nitrure et/ou un carbure. A titre d'exemples d'oxydes pouvant convenir dans le cadre de l'invention, on peut notamment citer les oxydes métalliques, et en particulier l'oxyde de titane, l'oxyde de zirconium, l'oxyde d'aluminium et l'oxyde de magnésium, l'oxyde de titane étant préféré. A titre d'exemples de carbures, on peut notamment citer les carbures métalliques, et en particulier le carbure de silicium. A titre d'exemples de nitrures pouvant être utilisés, on peut citer notamment le nitrure de titane, le nitrure d'aluminium, et le nitrure de bore. Selon un mode préféré de réalisation, la composition céramique comprend au moins un oxyde métallique en tant que matériau inorganique pulvérulent, et de préférence l'oxyde de titane.

Dans le cadre de l'invention, la composition céramique possède une rhéologie adaptée en termes de plasticité pour son extrusion au travers de la tête d'extrusion 6.

Selon un premier mode de réalisation, la matrice de la composition céramique comprend un ou plusieurs solvants. Le ou les solvants peuvent être aqueux ou organiques. A titre d'exemples, on peut citer l'eau, l'éthanol ou encore l'acétone.

De plus, la matrice de la composition céramique comprend un ou plusieurs additifs organiques. Avantageusement, ces additifs organiques sont solubles dans le ou les solvants de la matrice. Le ou les additifs organiques convenant dans le cadre de l'invention peuvent être choisis à titre d'exemples non limitatifs parmi :
- les liants, et par exemple parmi les éthers de cellulose tels que l'hydroxyéthylcellulose qui est un polymère, la gomme arabique qui est un polysaccharide, ou le polyéthylène glycol (PEG) ;
- les lubrifiants et plastifiants, et par exemple parmi le glycérol ou l'acide stéarique ;
- les épaississants et gélifiants, et par exemple parmi la gomme xanthane ou l'agar-agar qui est un polymère de galactose.

La teneur massique en matériau(x) inorganique(s) pulvérulent(s) dans la composition céramique peut aller de 50 à 90%, préférentiellement entre 80 et 85 % en poids, par rapport au poids total de la composition céramique.

La teneur massique en matrice dans la composition céramique peut aller de 10 % à 50 % en poids, préférentiellement de 15 à 20 % en poids, par rapport au poids total de la composition céramique.

Cette composition céramique n'est pas une poudre mais une pâte. Il est possible d'ajuster la rhéologie de cette composition céramique grâce à la granularité de la phase inorganique solide pulvérulente, et/ou grâce à la nature des additifs organiques lorsqu'ils sont présents et/ou grâce à leurs proportions respectives. En effet, par exemple, l'utilisation d'une matrice comportant un ou plusieurs additifs organiques solubles dans un ou plusieurs solvants compris dans la matrice permet de modifier la rhéologie de la composition céramique.

Selon un deuxième mode de réalisation, la composition céramique comprend une matrice constituée d'un ou plusieurs polymères thermofusibles. La matrice est de nature organique et solide à température ambiante.

Par « polymère thermofusible », on entend un polymère qui se ramollit sous l'effet de la chaleur.

À titre d'exemples de polymère thermofusible pouvant convenir dans le cadre de l'invention, on peut citer, utilisés seuls ou en mélange dans la matrice, les polymères ou famille de polymères suivants, éventuellement fonctionnalisés :
l'acide polylactique (PLA), l'alcool polyvinylique (PVA), l'acrylonitrile butadiène styrène (ABS), le polyprolylène (PP), le polyéthylène, le polyéthylène téréphtalate (PET), le polyuréthane thermoplastique (TPU), les polyoléfines, les élastomères thermoplastiques (TPE), les élastomère base polyoléfine (TPE-O) et le polycarbonate.

La teneur massique en matériau(x) inorganique(s) pulvérulent(s) dans la composition céramique peut aller de 40 à 95 %, préférentiellement entre 70 et 90 % en poids, par rapport au poids total de la composition céramique.

Dans le cadre de l'invention, la composition céramique, de préférence sous forme de granulés, est préchauffée en amont de sorte que le ou les polymères thermofusibles ramollissent de manière que la composition céramique puisse être mise sous pression en amont de l'orifice d'écoulement 8. De manière usuelle, la tête d'extrusion 6 est chauffée pour ramollir le ou les polymères thermofusibles permettant alors l'extrusion de la composition céramique. La température de la tête d'extrusion 6 et de l'orifice d'écoulement 8 peut être ajustée en fonction du ou des polymères thermofusibles présents dans la composition céramique.

De plus, dans le cadre de l'invention, il est possible d'ajuster la rhéologie de la composition céramique grâce à sa température dans la tête d'extrusion et/ou la granularité de la phase inorganique solide pulvérulente, et/ou grâce à la nature du ou des polymères thermofusibles et/ou grâce à leurs proportions.

Conformément à l'invention, le procédé selon l'invention vise à décomposer la trajectoire numérique en des chemins de manière à éviter dans la partie interne de la structure tridimensionnelle crue manipulable, la création d'espaces entre les bords arrondis du dépôt de matière en cours et ceux du dépôt de matière antérieurement déposé. Comme expliqué aux figures 1A et 1C, le dépôt de cordons de matière réalisé de manière contigüe selon l'état de la technique, conduit à la création de vides de matière persistant après frittage et susceptibles de réduire la résistance mécanique du support inorganique monolithique poreux.

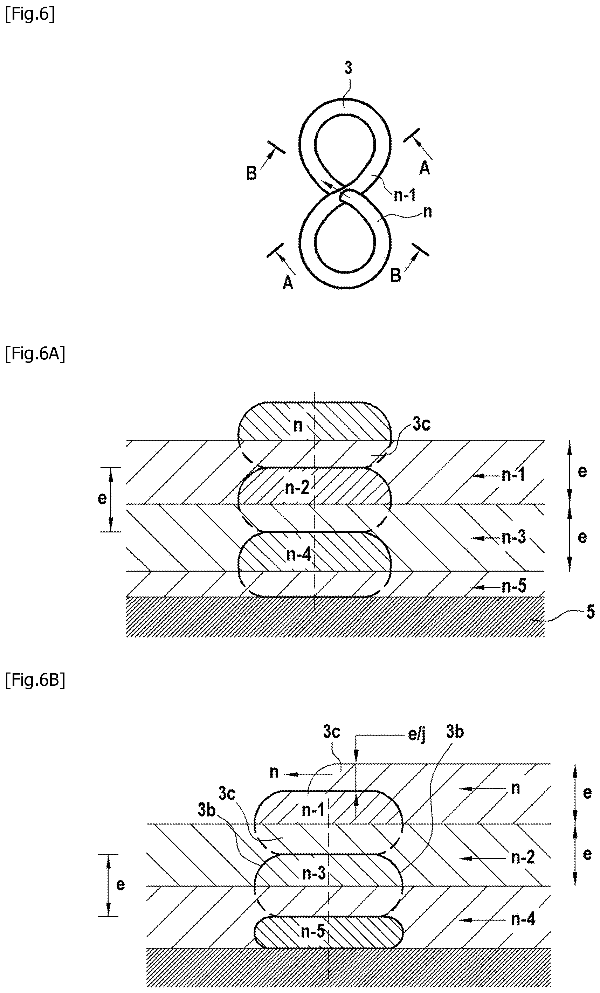

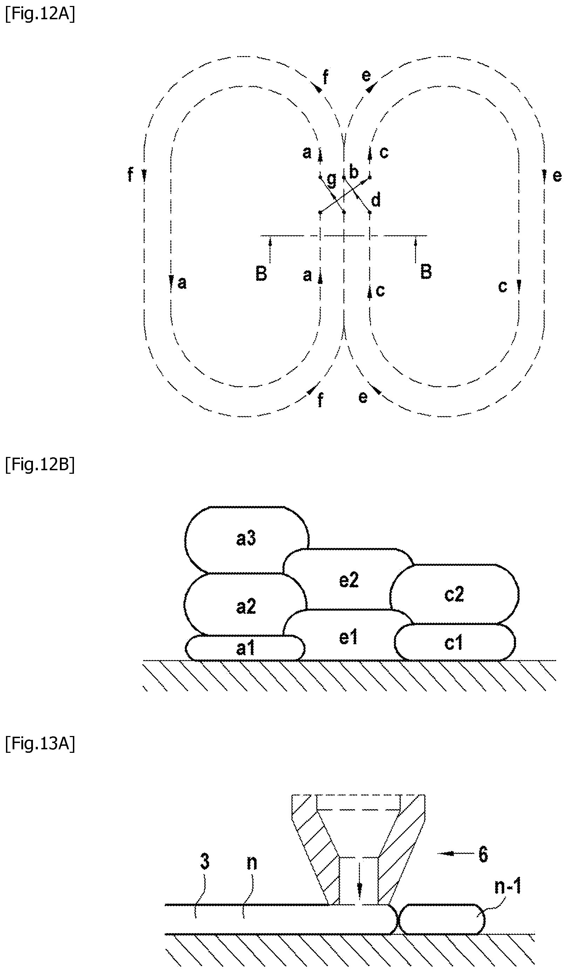

Le procédé conforme à l'invention vise à déterminer si la structure tridimensionnelle crue manipulable comporte une paroi dont la largeur est égale ou supérieure à la largeur nominale L du dépôt de matière. En effet, pour une paroi dont la largeur est égale à la largeur nominale L du dépôt de matière, cette paroi est construite à l'aide de dépôts de matière uniquement superposés sans création de vides de matière. Pour ce type de parois, il est à noter que le dépôt superposé de cordons de matière ne conduit pas à la création de vides de matière sauf dans le cas où la trajectoire comporte un chemin avec un croisement comme cela apparait en relation des figures 6 et 13A à 13E.

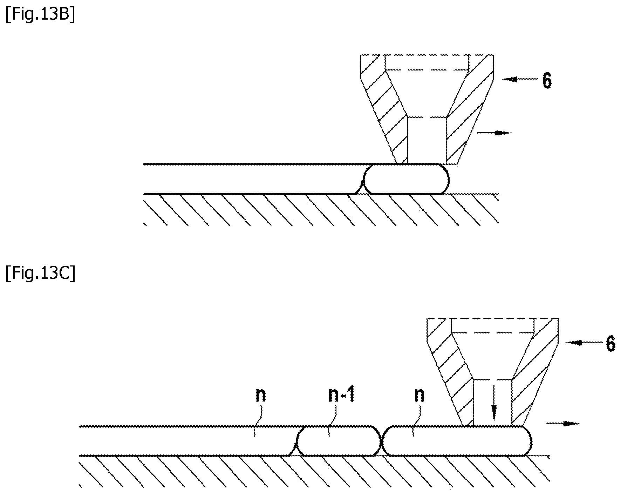

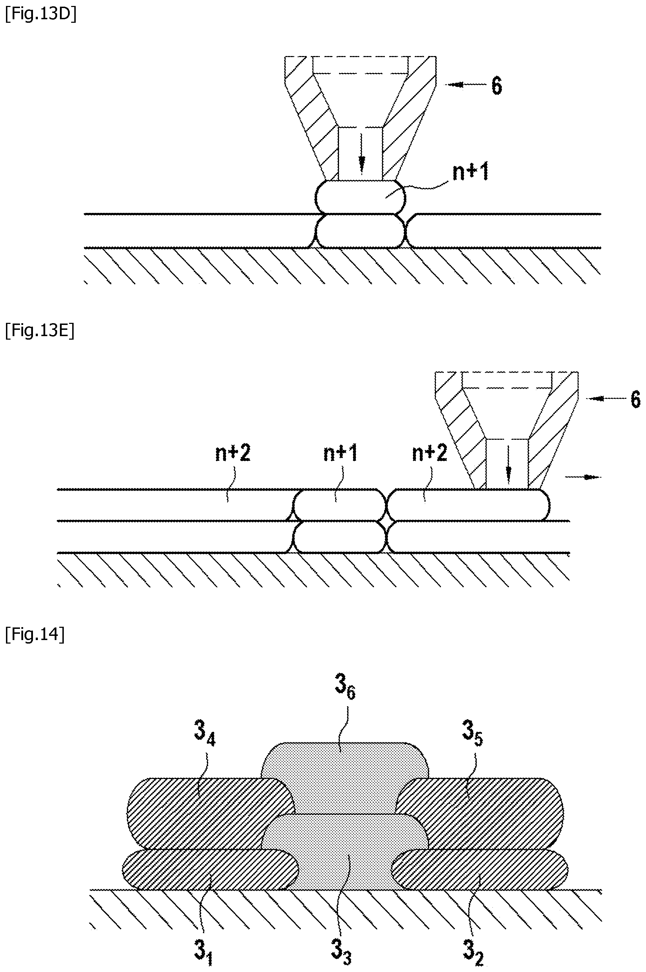

Tel que cela ressort de la figure 6, un chemin avec croisement apparait pour une structure en forme d'un huit. Un croisement apparait lorsque la trajectoire, bouclant sur elle-même, revient sur le point I de coordonnés Xi, Yi où un dépôt de matière (d'ordre n-1) a par ailleurs été déjà déposé. Le franchissement d'un dépôt de matière (ordre n-1) se fait en venant toucher par le dépôt de matière en cours (ordre n), le dépôt de matière précédemment réalisé (figure 13A). L'extrusion de la matière est alors arrêtée (figure 13B) en glissant à une même altitude et en reprenant l'extrusion après le bord aval du dépôt de matière d'ordre n-1 (figure 13C). Le dépôt de matière d'ordre n+1 vient en superposition du dépôt de matière d'ordre n-1 et le franchissement de ce nouveau dépôt de matière est réalisé comme décrit ci-dessus (figures 13D et 13E). Comme il apparait clairement sur les figures, la juxtaposition ou l'accolement de deux dépôts de matière lors du franchissement complet d'un dépôt de matière précédemment déposé conduit à la création de vides.

Les figures 3 et 3A illustrent une première variante de réalisation dite mode conventionnel pour réaliser une paroi 10 dont la largeur est égale à la largeur nominale L du dépôt de matière. A titre d'exemple, cette paroi 10 fait partie d'une structure tridimensionnelle crue manipulable se présentant sous la forme d'un support de section circulaire présentant un unique canal central 11. La trajectoire de la tête d'extrusion 6 est décomposée en des chemins circulaires de diamètre moyen D, d'une longueur chacune à nD et avec une élévation de la tête d'extrusion selon l'axe vertical par incréments e à chaque tour. La tête d'extrusion 6 effectue un premier tour t en étant positionnée à une élévation e par rapport au niveau du plateau 5, de sorte qu'elle extrude une quantité de matière constante pour réaliser un dépôt de matière d'épaisseur constante e. A titre d'exemple, la flèche F indique le sens ici antihoraire de déplacement de la tête d'extrusion 6. Une fois le premier tour t effectué, la tête d'extrusion 6 monte d'une valeur égale à l'épaisseur e du dépôt de matière pour réaliser un deuxième tour en extrudant une quantité de matière constante pour déposer continument la matière. Les dépôts de matière 3 sont réalisés ainsi de suite jusqu'à obtenir la hauteur souhaitée.

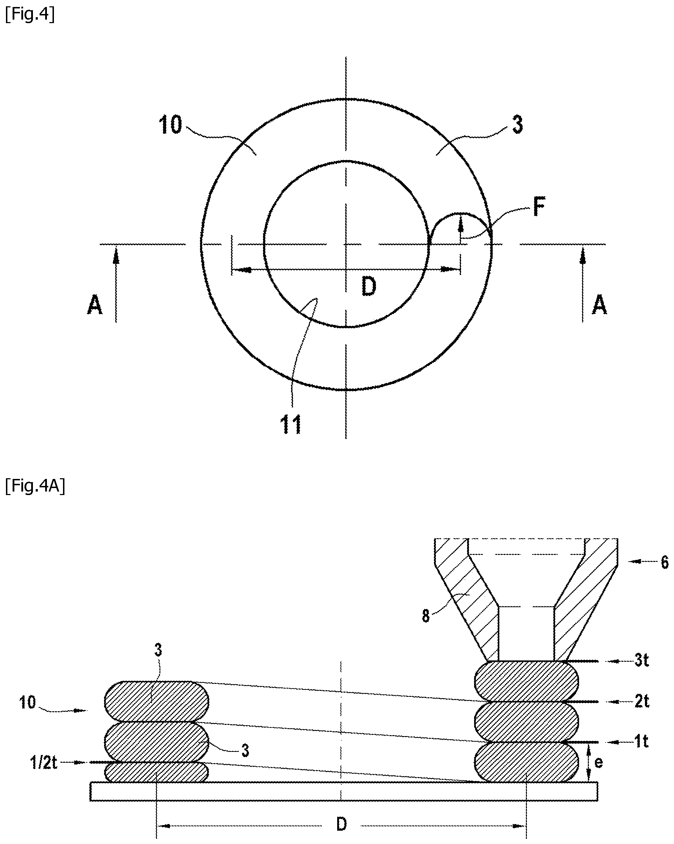

Les figures 4 et 4A illustrent une deuxième variante de réalisation dite mode vase pour réaliser une paroi 10 dans le cas par exemple d'une structure tridimensionnelle crue manipulable se présentant sous la forme d'un support de section circulaire présentant un unique canal central 11. La trajectoire de la tête d'extrusion 6 est décomposée en des chemins circulaires de diamètre moyen D, d'une longueur chacun égale à nD, avec une élévation de la tête d'extrusion selon l'axe vertical par une succession d'incréments de manière qu'à la fin de chaque tour, la somme de ces incréments permettent d'obtenir à chaque tour, un dépôt de matière d'épaisseur e.

Lors du premier tour t, la tête d'extrusion extrude une quantité de matière croissante proportionnelle à sa position sur la rampe de pente moyenne e/nD. Une fois le premier tour t effectué, la tête d'extrusion 6 fait son deuxième tour en suivant la même pente moyenne e/nD et en extrudant une quantité de matière constante pour déposer continument la matière selon une élévation correspondant à l'épaisseur e. Les dépôts de matière 3 sont réalisés ainsi de suite jusqu'à obtenir la hauteur souhaitée.

Dans le cas où la structure tridimensionnelle crue manipulable comporte une paroi dont la largeur est supérieure à la largeur nominale L du dépôt de matière, alors les dépôts de matière doivent être réalisés conformément à l'invention puisqu'il n'est plus possible de construire cette paroi à l'aide de dépôts de matière uniquement superposés. Conformément à l'invention, le procédé prévoit une intrication des dépôts de matière 3 en tant que résultat d'une imbrication par chevauchement(s) et/ou croisement(s) desdits dépôts de matière 3 pour éviter la création des espaces ou des vides de matière entre les dépôts de matière. On entend par intrication au sens de l'invention, indépendamment de la définition qu'en donne la mécanique quantique, l'état des dépôts de matière intriqués du fait des chevauchements et/ou des croisements.

Aussi, pour une paroi 10 dont la largeur est supérieure à la largeur nominale L du dépôt de matière 3, le procédé selon l'invention vise à décomposer la trajectoire numérique de la tête d'extrusion 6 exclusivement en des chemins avec chevauchement et/ou en des chemins avec croisement. Il doit être compris que la tête d'extrusion 6 (ou plus précisément son chariot porteur) suit point après point, une trajectoire complétement définie du début jusqu'à la fin du processus de fabrication de la structure tridimensionnelle crue manipulable 2, par une succession de points. Chacun de ces points est spatialement prédéfini par ses coordonnées cartésiennes Xi, Yi, Zi. Xi et Yi définissent exactement la position du centre de l'orifice circulaire 8 de la buse d'extrusion. La tête d'extrusion 6 se déplace ainsi d'un point A (Xa, Ya, Za) à un point B (Xb, Yb, Zb) en suivant un vecteur AB, puis du point B vers un point C en suivant le vecteur AC, et ainsi de suite en se conformant à une succession de lignes d'instructions dites instructions G-code du logiciel intermédiaire entre le modèle numérique 3D et la machine d'impression. Il est à noter qu'en plus de la détermination de la trajectoire en chacun de ses points déterminée par les coordonnées cartésiennes Xi, Yi, Zi, il est défini pour chacun de ces points, tous les paramètres, à savoir en particulier le débit d'extrusion E et la vitesse de déplacement F de la tête d'extrusion 6.

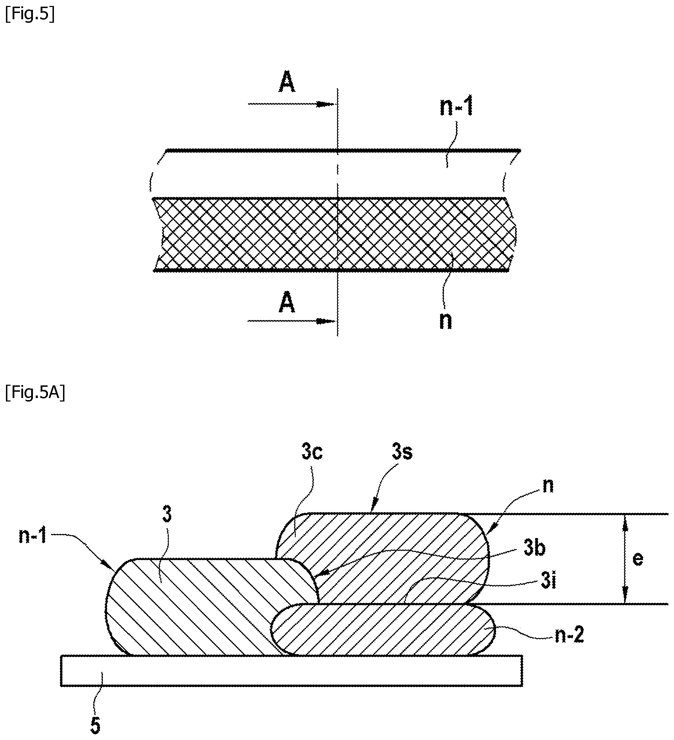

Il doit être compris que la trajectoire numérique de la tête d'extrusion 6 est décomposée en des chemins avec chevauchement et/ou en des chemins avec croisement. Un chemin avec chevauchement correspond comme illustré aux figures 5 et 5A, à une partie de trajectoire pour laquelle un dépôt de matière 3 (d'ordre n) chevauche partiellement au moins un bord 3b d'un dépôt de matière 3 (d'ordre n-1) antérieurement déposé de manière à éviter dans la partie interne de la structure tridimensionnelle crue manipulable, des espaces entre les bords arrondis du dépôt de matière en cours et ceux du dépôt de matière antérieurement déposé. Tel que cela ressort plus précisément de la figure 5A, la matière en cours de dépôt (d'ordre n) chevauche partiellement au moins un bord 3b d'un dépôt de matière antérieurement déposé (d'ordre n-1), par une partie de matière chevauchante 3c présentée dans son épaisseur c'est-à-dire entre la face supérieure 3s et la face inférieure 3i dudit dépôt en cours. De plus, cette partie de matière chevauchante 3c possède une épaisseur strictement inférieure à la hauteur nominale e.

Selon une caractéristique du procédé conforme à l'invention, pour un chemin avec chevauchement, la tête d'extrusion 6 est pilotée pour régler le débit d'extrusion en fonction du degré de chevauchement de la partie de matière chevauchante sur le dépôt de matière antérieurement déposé.

Un chemin avec croisement correspond comme illustré aux figures 6A et 6B, à une partie de trajectoire pour laquelle un dépôt de matière en cours de dépôt (d'ordre n) croise au moins un dépôt de matière antérieurement déposé (d'ordre n-1), avec un chevauchement complet dudit dépôt de matière antérieurement **déposé de** manière à éviter dans la partie interne de la structure tridimensionnelle crue manipulable, des espaces entre les bords arrondis du dépôt de matière en cours et ceux du dépôt de matière antérieurement déposé. Dans un chemin avec croisement, la matière en cours de dépôt (ordre n) chevauche complétement, par une partie de matière chevauchante 3c, le dépôt de matière antérieurement déposé (ordre n-1), c'est-à-dire en s'étendant au minimum d'un bord 3b à l'autre du dépôt de matière antérieurement déposé. Ce croisement entre ces deux dépôts de matière peut intervenir selon toutes angulations possibles entre les directions de ces deux dépôts de matière. La partie de matière chevauchante 3c est considérée dans l'épaisseur du dépôt de matière en cours c'est-à-dire entre la face supérieure et la face inférieure dudit dépôt en cours. De plus, cette partie de matière chevauchante 3c présente une épaisseur strictement inférieure à la hauteur nominale e.

Il résulte de la description qui précède une imbrication des dépôts de matière 3 entre eux. Une telle imbrication existe à partir du moment où il y a dans un tour, au moins un chemin avec chevauchement et/ou un chemin avec croisement. Chacun des tours suivants qui vient nécessairement « couvrir » le ou les chevauchements et/ou le ou les croisements précédents réalise une intrication des dépôts de matière 3. L'intrication des dépôts de matière est ainsi le résultat de multiples tours pour chacun desquels il y a au moins un chemin avec chevauchement et/ou un chemin avec croisement.

Selon une caractéristique du procédé conforme à l'invention, pour un chemin avec croisement, la tête d'extrusion 6 est pilotée pour réduire la quantité de matière déposée pour réaliser la partie de matière chevauchante ayant une épaisseur strictement inférieure à la hauteur nominale e. Ainsi, comme cela apparait clairement aux figures 6A et 6B, chaque dépôt de matière présente une hauteur nominale e sauf au droit ou lors du passage au-dessus d'un dépôt de matière déjà réalisé.

Ainsi, dans l'exemple illustré aux figures 6A et 6B, un premier dépôt de matière n est réalisé avec épaisseur inférieure à la hauteur nominale e, par exemple égale à e/2. Pour un dépôt de matière n qui croise le dépôt de matière n-1 précédemment réalisé, ce dépôt de matière n est réalisé avec une épaisseur nominale e sauf lorsqu'il chevauche le dépôt de matière précédent n-1. Lorsque la tête d'extrusion est en surplomb du dépôt de matière, le débit d'extrusion est réduit de sorte que la partie chevauchante 3d du dépôt possède une épaisseur inférieure à l'épaisseur nominale e, égale à e/2 dans l'exemple illustré. De cette manière, les chemins de croisement réalisés selon le principe de l'invention ne présentent pas de vides de matière à la différence de l'art antérieur comme illustré aux figures 13C à 13E.

Selon une variante préférée de mise en œuvre de l'invention, la tête d'extrusion 6 est montée mobile selon la trajectoire numérique prédéfinie T pour effectuer une succession de tours t correspondant chacun au chemin parcouru pour retrouver une même position dans le plan horizontal avec une élévation correspondant à une hauteur nominale e. En d'autres termes, la trajectoire numérique de la tête d'extrusion 6 est décomposée en tours en considérant que pour chaque tour, la tête d'extrusion s'élève de la hauteur nominale e. Bien entendu, le nombre de tours t est choisi afin d'obtenir la hauteur souhaitée pour la structure tridimensionnelle crue manipulable 2.

Dans chacun de ces tours t, le parcours de la tête d'extrusion 6 est un ou plusieurs chemins avec chevauchement et/ou un ou plusieurs chemins avec croisement. Pour chacun de ces tours, la tête d'extrusion 6 suit un parcours formé par une succession de points de coordonnées Xi, Yi, Zi comme expliqué précédemment, avec possibilité d'élévation suivant l'axe vertical, sur l'un ou plusieurs de ces points.

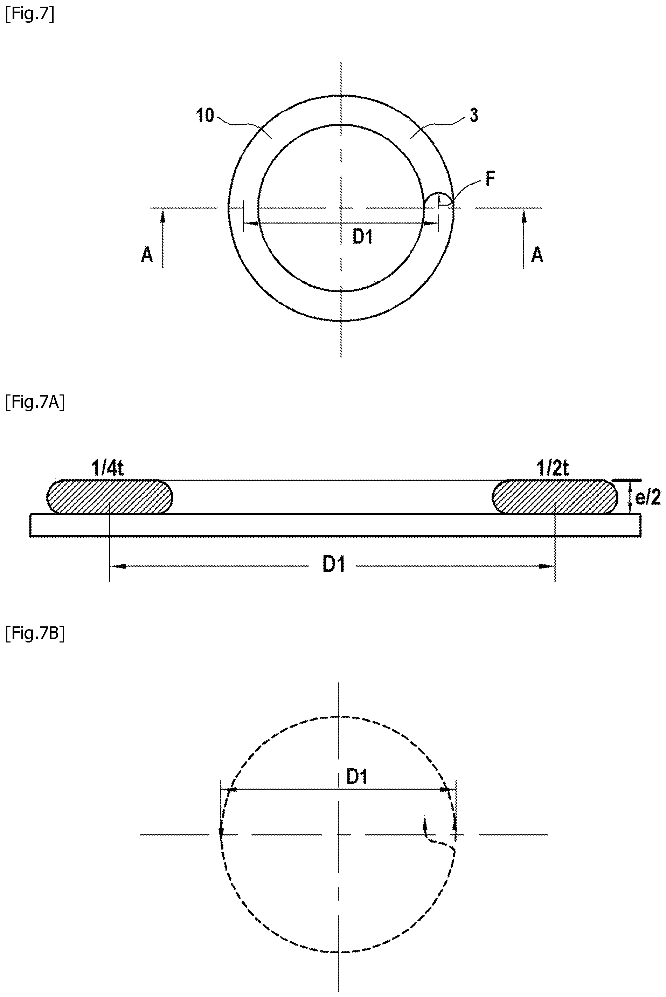

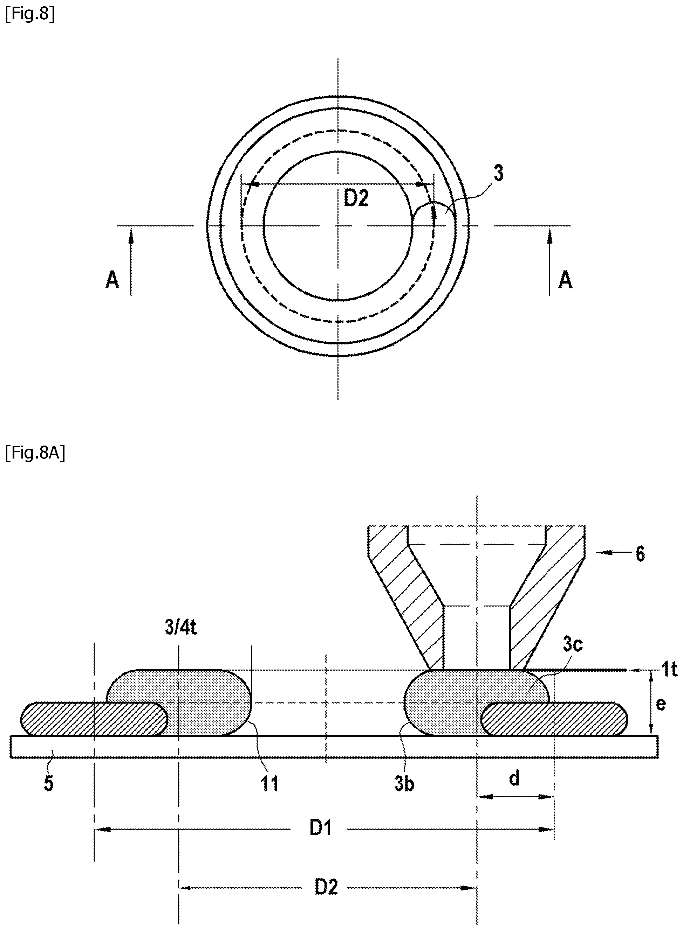

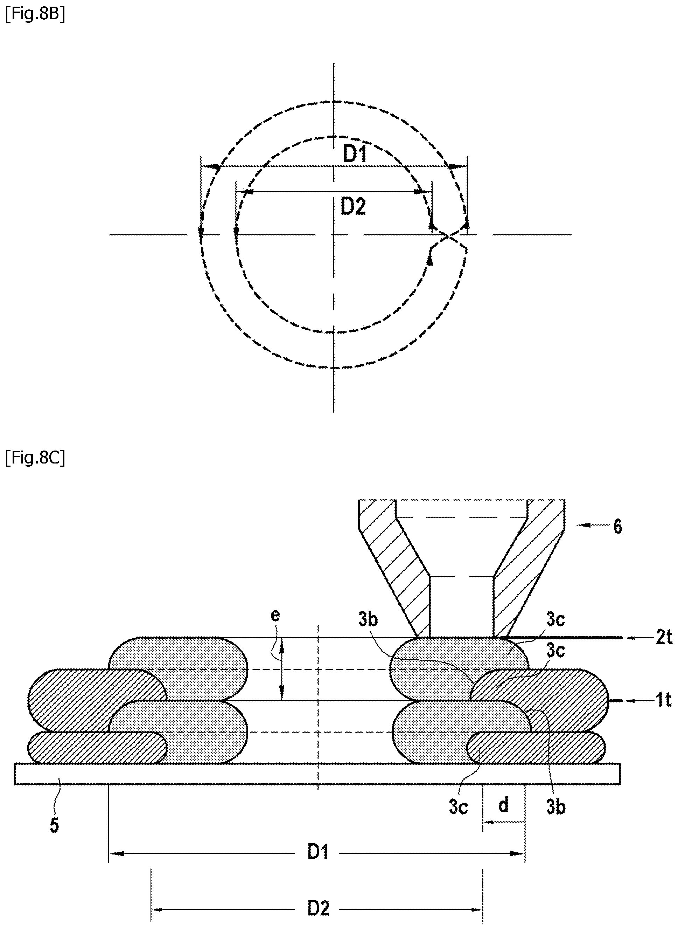

Selon un premier exemple de mise en œuvre décrit plus précisément en relation des figures 7 à 7B et 8 à 8C, le procédé prévoit de piloter la tête d'extrusion 6 afin que sur au moins un tour, la tête d'extrusion s'élève au moins une fois d'une hauteur intermédiaire qui est une fraction de la hauteur nominale e.

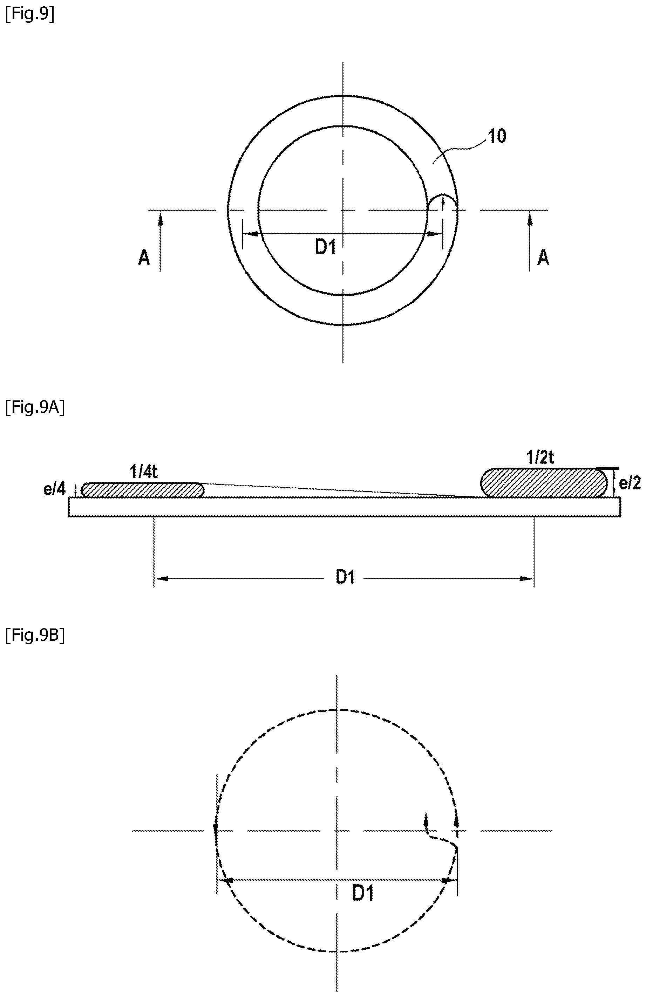

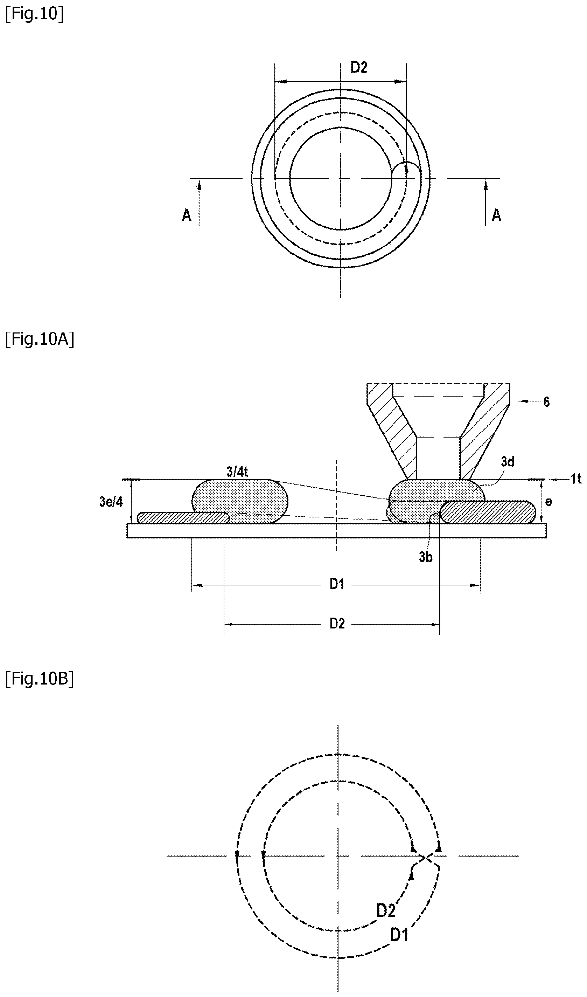

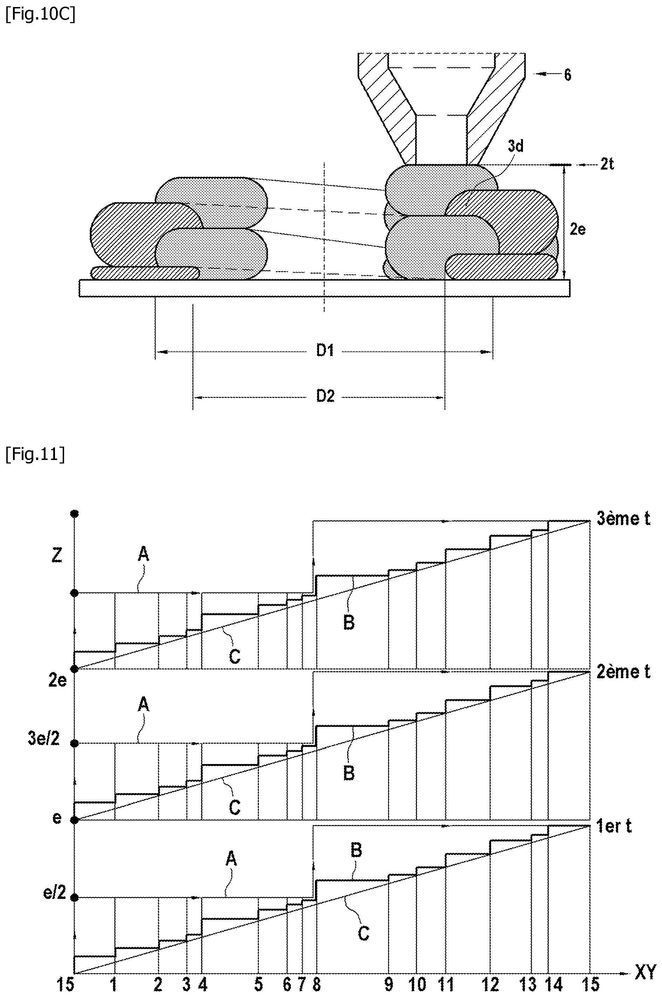

Selon un deuxième exemple de mise en œuvre décrit plus précisément en relation des figures 9 à 9B et 10 à 10C, le procédé prévoit de piloter la tête d'extrusion 6 afin que sur au moins un tour, la tête d'extrusion se trouve positionnée en différents points du chemin en s'élevant en chaque point d'un incrément de hauteur dont la somme correspond à la hauteur nominale e.

La description qui suit en relation des figures 7 à 7B et 8 à 8C, décrit le premier exemple de mise en œuvre du procédé appelé « mode vase séquentiel » consistant à construire une partie du chemin à une même altitude a (par exemple a=e/2) puis à incrémenter en élévation d'une valeur a afin de terminer le tour et de chevaucher le dépôt précédent d'une partie de matière chevauchante de valeur a. Selon cette méthode, la hauteur nominale e est un multiple entier de a.

La figure 7B montre la première moitié du chemin à parcourir par la tête d'extrusion correspondant à un cercle de diamètre D1. Comme illustré sur les figures 7 et 7A, un premier cordon de matière 3 est déposé sur le plateau horizontal 5 avec une élévation égale à e/2 continue selon tout le parcours du cercle de diamètre D1. Au sens de l'invention, ce parcours qui couvre une circonférence de 360°, correspond à un demi-tour. Une fois ce demi-tour parcouru à une même altitude e/2, la tête d'extrusion 6 et donc le centre de l'orifice d'écoulement 8 se décale radialement vers le centre du cercle d'une distance égale à d = (D2-D1)/2 et monte d'un incrément égal e/2 en suivant un cercle de diamètre D2 (figures 8A, 8B). Il s'ensuit un dépôt de matière qui chevauche partiellement le bord intérieur 3b du dépôt de matière antérieurement déposé, par une partie de matière chevauchante 3c présentée dans son épaisseur. Il est à noter que la partie de matière chevauchante 3c possède une épaisseur strictement inférieure à la hauteur nominale e. La tête d'extrusion 6 a ainsi parcouru un tour t au sens de l'invention correspondant au chemin avec le cercle de diamètre D1 suivi par le cercle de diamètre D2 (figure 8B).

Dans la position illustrée à la figure 8A, la tête d'extrusion 6 (et donc le centre de l'orifice d'écoulement 8) est décalée radialement vers l'extérieur du cercle D2 d'une distance égale à d et monte à nouveau d'un incrément e/2 de manière à chevaucher partiellement le dépôt de matière précédent selon le cercle D1. Il s'ensuit un dépôt de matière qui chevauche partiellement le bord extérieur 3b du dépôt de matière antérieurement déposé, par une partie de matière chevauchante 3d présentée dans son épaisseur. La partie de matière chevauchante 3d possède une épaisseur strictement inférieure à la hauteur nominale e. La tête d'extrusion 6 est décalée radialement vers l'intérieur du cercle D1 d'une distance égale à d et monte à nouveau d'un incrément e/2 de manière à chevaucher partiellement le dépôt de matière précédent selon le cercle D2. Il s'ensuit un dépôt de matière qui chevauche partiellement le bord intérieur 3b du dépôt de matière antérieurement déposé, par une partie de matière chevauchante 3c présentée dans son épaisseur. La tête d'extrusion 6 a ainsi parcouru un deuxième tour t au sens de l'invention correspondant au chemin avec le cercle de diamètre D1 suivi par le cercle de diamètre D2 (figure 8C).

La tête d'extrusion 6 est ainsi de suite commandée selon un nombre de tours permettant la construction selon la hauteur souhaitée pour la structure tridimensionnelle crue manipulable 2. Il est à noter que dans l'exemple illustré, les parcours selon le premier tour et le deuxième tour sont identiques. Bien entendu, il peut être envisagé que les parcours des différents tours soient différents entre eux. De même, la hauteur nominale e pour chacun des tours qui est identique dans l'exemple illustré, peut être différente pour les différents tours.

La description qui suit en relation des figures 9 à 9B et 10 à 10C, décrit le deuxième exemple de mise en œuvre du procédé appelé « mode vase continu » pour lequel la tête d'extrusion 6 extrude une quantité de matière croissante proportionnelle à sa position.

La figure 9B montre la première moitié du chemin à parcourir par la tête d'extrusion correspondant à un cercle de diamètre D1. Comme illustré sur les figures 9 et 9A, un premier cordon de matière est déposé sur le plateau horizontal 5 avec une élévation progressive continue selon tout le parcours du cercle de diamètre D1 pour atteindre au terme du parcours de cercle D1, une hauteur égale à e/2. Au sens de l'invention, ce parcours correspond à un demi-tour et il est à noter qu'au quart de tour, l'épaisseur du dépôt de matière est égale à e/4. Une fois ce demi-tour réalisé pour atteindre l'altitude e/2, la tête d'extrusion 6 se décale radialement vers le centre du cercle d'une distance égale à d= (D2-D1)/2 et monte progressivement en continu en suivant un cercle de diamètre D1 pour atteindre l'altitude e au terme du chemin parcouru selon ce diamètre D1 (figures 10, 10A, 10B). Il s'ensuit un dépôt de matière qui chevauche partiellement le bord intérieur 3b du dépôt de matière antérieurement déposé, par une partie de matière chevauchante 3d présentée dans son épaisseur. Il est à noter la partie de matière chevauchante possède une épaisseur strictement inférieure à la hauteur nominale e. La tête d'extrusion 6 a ainsi parcouru un tour t au sens de l'invention correspondant au chemin avec le cercle de diamètre D1 suivi par le cercle de diamètre D2.

Dans la position illustrée aux figures 10A, la tête d'extrusion 6 est décalée radialement vers l'extérieur du cercle D2 d'une distance égale à d et monte progressivement d'un incrément e/2 de manière chevaucher partiellement le dépôt de matière précédent selon le cercle D1. Il s'ensuit un dépôt de matière qui chevauche partiellement le bord extérieur 3b du dépôt de matière antérieurement déposé, par une partie de matière chevauchante 3d présentée dans son épaisseur. La partie de matière chevauchante possède une épaisseur strictement inférieure à la hauteur nominale e. La tête d'extrusion 6 est décalée radialement vers l'intérieur du cercle D1 d'une distance égale à d et monte progressivement à nouveau d'un incrément e/2 de manière chevaucher partiellement le dépôt de matière précédent selon le cercle D2. Il s'ensuit un dépôt de matière qui chevauche partiellement le bord intérieur du dépôt de matière antérieurement déposé, par une partie de matière chevauchante présentée dans son épaisseur. La tête d'extrusion a ainsi parcouru un deuxième tour t au sens de l'invention correspondant au chemin avec le cercle de diamètre D1 suivi par le cercle de diamètre D2 (figure 10C).

La tête d'extrusion 6 est commandée ainsi de suite selon un nombre de tours permettant la construction selon la hauteur souhaitée pour la structure tridimensionnelle crue manipulable. Il est à noter que dans l'exemple illustré, les parcours selon le premier tour et le deuxième tour sont identiques. Bien entendu, il peut être envisagé que les parcours des différents tours soient différents entre eux. De même, la hauteur nominale pour chacun des tours qui est identique dans l'exemple illustré, peut être différente pour les différents tours.

La figure 11 permet d'illustrer à titre d'exemple, par la courbe A, le parcours de la tête d'extrusion 6 pour le procédé appelé « mode vase séquentiel » décrit en relation des figures 7 à 7B et 8 à 8C. Le chemin est parcouru par exemple de point en point par deux paliers d'incréments e/2. Selon cet exemple, on pilote la tête d'extrusion 6 afin que sur au moins un tour t, la tête d'extrusion s'élève au moins une fois d'une hauteur intermédiaire qui est une fraction de la hauteur nominale.

La courbe B décrit le parcours de la tête d'extrusion 6 pour le procédé appelé« mode vase continu» illustré par les figures 9 à 9B et 10 à 10C. Dans l'exemple illustré, chaque chemin (un tour t) est parcouru selon quinze points (de cordonnées en X, Y) c'est-à-dire avec quinze incréments ou paliers de hauteur dZ proportionnels à la distance qui sépare deux points successifs soit quinze incréments d'égale hauteur dZ=e/15. Le procédé vise ainsi à piloter la tête d'extrusion 6 afin que sur au moins un tour, la tête d'extrusion se trouve positionnée en différents points du chemin en s'élevant en chaque point d'un incrément de hauteur dont la somme correspond à la hauteur nominale e. Il est à noter que la figure 11 fait apparaitre la courbe d'élévation progressive continue C correspondant à l'élévation progressive selon l'axe Z de la tête d'extrusion.

Il ressort de la description qui précède qu'on pilote la tête d'extrusion 6 afin que par la succession de tours, la tête d'extrusion s'élève pour bâtir la structure tridimensionnelle crue manipulable 2 conforme au modèle 3D numérique M, en suivant une trajectoire avec un dépôt de matière 3 ininterrompu du début jusqu'au terme de la construction de la structure tridimensionnelle crue manipulable 2.

Par ailleurs, la tête d'extrusion 6 est pilotée afin qu'au cours de chaque tour t, la tête d'extrusion est décalée dans le plan horizontal X, Y afin que la matière en cours de dépôt chevauche partiellement un bord d'un dépôt de matière antérieurement déposé. Avantageusement, pour un chemin avec chevauchement, on pilote la tête d'extrusion 6 pour régler sa position dans le plan horizontal X, Y pour définir le degré de chevauchement de la partie de matière chevauchante 3d sur le dépôt de matière antérieurement déposé. Comme décrit précédemment, le décalage d dans le plan horizontal X, Y entre les parcours consécutifs permet de choisir le degré de chevauchement entre les dépôts de matière.

Dans les exemples de réalisation illustrant le principe de l'invention, il est à noter que la paroi à construire présente une largeur pouvant être construite à partir de deux dépôts de matière se chevauchant partiellement. Bien entendu, le principe de l'invention peut être mis en œuvre pour construire une paroi dont la largeur nécessite un nombre supérieur de dépôts de matière comme illustré à titre d'exemple aux figures 12A et 12B avec trois dépôts. Selon cet exemple de réalisation, la paroi à construire délimite deux canaux contigus et présente une largeur avec chevauchements de trois dépôts. La construction de cette paroi est obtenue en mode vase en suivant le chemin a1+b1+c1+d1+e1+f1+g1 puis le chemin a2+b2+c2+d2+e2+f2+g2 puis a3+b3+...Le débit de la tête d'extrusion 6 est descendue à zéro quand la tête d'extrusion 6, terminant fi, rejoint ei jusqu'à la bifurcation (en suivant gi) pour rejoindre ai+1. Les épaisseurs des dépôts de matière du premier tour sont au prorata du chemin parcouru tandis que les épaisseurs des dépôts de matière à partir du deuxième tour sont égales à l'épaisseur nominale.

Selon une caractéristique de mise en œuvre de l'invention, il est à noter que pour un chemin avec chevauchement, on pilote la tête d'extrusion 6 pour conserver constant le débit de matière déposée alors que le débit de la tête d'extrusion 6 est diminué pour un chemin avec croisement.

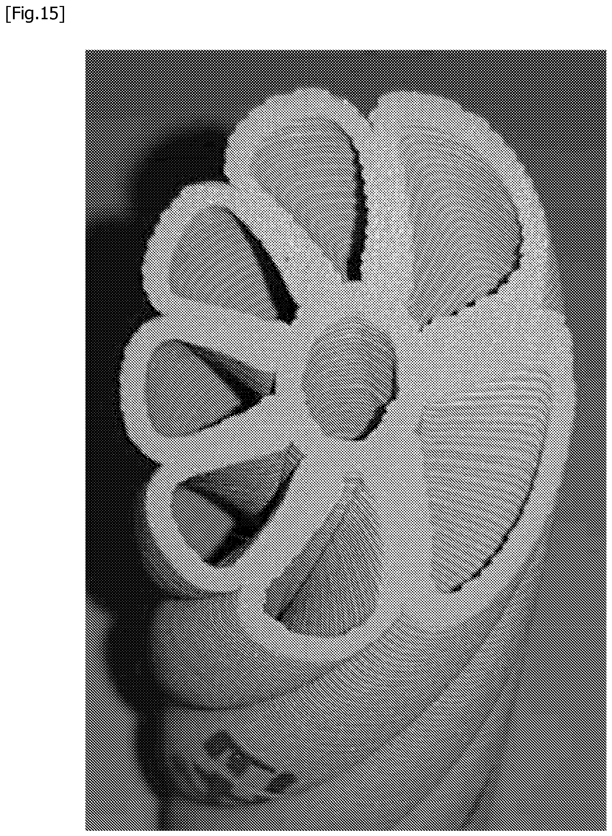

Le procédé selon l'invention permet ainsi de construire une structure tridimensionnelle crue manipulable 2 sans création d'espaces vides de matière, quel que soit la forme ou les dimensions de parois. La figure 15 illustre un exemple une structure tridimensionnelle crue manipulable 2 qui après frittage ne présente aucun espace vide de matière dans les parois réalisées. Les exemples décrits ci-avant explicitent une première variante avantageuse de réalisation dite mode conventionnel ou mode vase pour laquelle la tête d'extrusion suit une trajectoire avec un dépôt de matière 3 ininterrompu du début jusqu'au terme de la construction de la structure tridimensionnelle crue manipulable 2.

La figure 14 illustre une deuxième variante de réalisation pour laquelle la tête d'extrusion 6 est montée mobile selon la trajectoire numérique prédéfinie T pour effectuer des dépôts de matière en superposition par strates s'élevant chacune d'une hauteur nominale e. Le dépôt de matière par strates est décrit notamment par les demandes de brevet WO 2020/109715 et WO2020/109716. Ce procédé consiste à former une première strate 3₁ et 3₂, selon le modèle 3D numérique M prédéterminé par le logiciel de conception par ordinateur, grâce au déplacement horizontal de l'orifice d'écoulement 8 au-dessus du plateau horizontal 5.

La tête d'extrusion 6 se déplace horizontalement, et donc parallèlement au plateau horizontal 5, selon un chemin prédéterminé en fonction du modèle 3D numérique M, pour former la première strate. Après le dépôt de la première strate, la tête d'extrusion 6 se déplace de sorte que le cordon déposé forme la deuxième strate 3₃ conformément au modèle 3D numérique M. Pour cela, la tête d'extrusion 6 se déplace verticalement (c'est-à-dire selon l'axe Z) et horizontalement (c'est-à-dire selon les axes X et/ou Y) jusqu'à la position souhaitée. L'extrusion de la composition inorganique 4 au travers de la tête d'extrusion 6 peut être continue ou discontinue. Ainsi, la deuxième strate est déposée sur la première strate par la superposition du dépôt de matière sur la strate préalablement déposée, conformément au modèle 3D numérique M.

Bien entendu, le dépôt de matière est réalisé pour assurer un chevauchement (partiel ou complet) comme décrit ci-avant pour éviter la création de vides entre les dépôts de matière. Ainsi, dans l'exemple illustré à la figure 14, le dépôt de matière 3₃ de la deuxième strate chevauche partiellement à partir de ses deux bords opposés, les bords voisins de deux dépôts de matière antérieurement déposés 3₁ et 3₂, permettant d'éviter la création d'espaces vides.

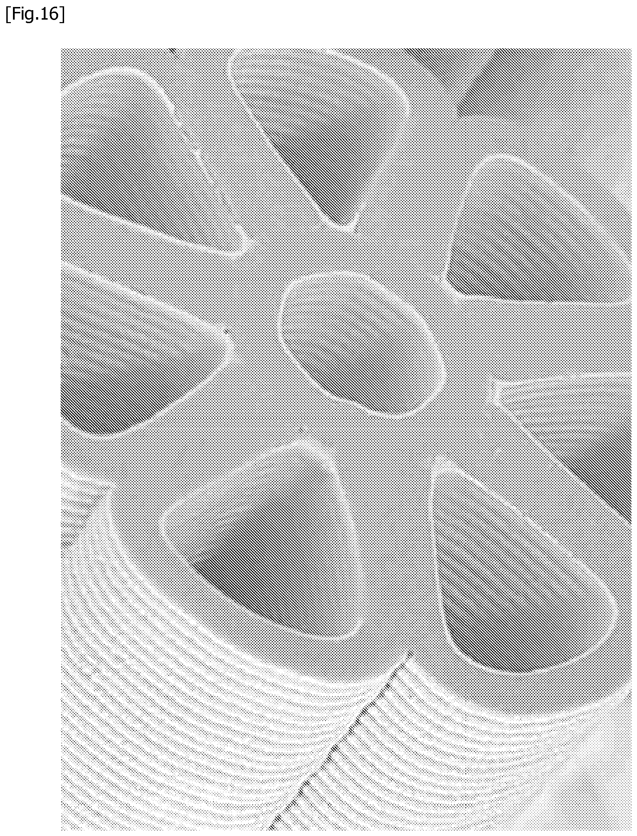

Le procédé selon l'invention permet de construire des structures tridimensionnelles crues manipulables 2 destinées à former des supports inorganiques poreux monolithiques 1, présentant les caractéristiques de résistance mécanique adaptées à leur utilisation en filtration tangentielle. Avantageusement, la tête d'extrusion 6 est pilotée afin de ménager dans la structure tridimensionnelle crue manipulable 2, au moins un canal 11 de circulation d'un milieu fluide à traiter. La paroi de ce canal 11 est réalisée par les bords arrondis 3b des dépôts de matière situés à l'opposé de la partie de matière chevauchante. Comme illustré sur les dessins, la tête d'extrusion 6 est configurée de sorte que les dépôts de matière possèdent des bords arrondis 3b. Ainsi, un canal 11 possède une paroi présentant des reliefs arrondis s'étendant chacun sur toute la périphérie du canal en étant défini par le bord arrondi 3b des dépôts de matière. Ces reliefs arrondis périmétriques s'étendent de manière superposée sur la longueur du canal comme illustré aux figures 15 et 16. A l'échelle de l'épaisseur des dépôts de matière e, ces reliefs périmétriques arrondis participent à leur niveau, dans ce canal, en filtration tangentielle, à la génération de turbulences tout le long du canal. La figure 16 permet de constater que ces reliefs périmétriques arrondis sont présents même lorsque la paroi interne des canaux 11 est revêtue de couches séparatrices dont le profil apparait sous la forme d'un trait blanc sur la figure 16. La ou les couches séparatrices épousent ainsi les reliefs périmétriques arrondis dont le profil arrondi persiste pour participer à la création de turbulences dans le canal 11. Il est à noter que le support inorganique monolithique poreux 1 fabriqué selon le procédé conforme à l'invention possède une surface extérieure présentant également une succession de reliefs périmétriques arrondis St qui s'étendent de manière superposée le long du support, comme illustré aux figures 2B, 15 et 16.

## Revendications

1. Procédé de fabrication d'au moins un support inorganique monolithique poreux (1) possédant au moins un canal pour la circulation du fluide à traiter et ayant une porosité comprise entre 10% et 60% et un diamètre moyen de pores appartenant à la gamme allant de 0,5 µm à 50 µm, à l'aide d'une machine d'impression 3D (I) comportant au moins une tête d'extrusion (6) montée mobile dans l'espace au-dessus d'un plateau horizontal fixe (5), en étant déplacée successivement avec une hauteur nominale (e) selon une trajectoire numérique prédéfinie (T) pour effectuer des dépôts de matière en superposition présentant chacun une largeur nominale et une épaisseur définie entre une surface inférieure et une surface supérieure, ladite machine d'impression 3D permettant le dépôt de matière sous la forme :
- d'un cordon à bords arrondis de manière à créer à la paroi d'au moins un canal de circulation, des reliefs périmétriques arrondis participant à la génération de turbulences,
- d'une composition (4) pour bâtir, sur ledit plateau horizontal (5), à partir de la trajectoire numérique prédéfinie (T), des parois d'une structure tridimensionnelle crue manipulable (2) destinée à former le ou les supports inorganiques poreux monolithiques (1), **caractérisé en ce que** le procédé consiste:
- pour une paroi dont la largeur est supérieure à la largeur nominale (L) du dépôt de matière, à décomposer la trajectoire numérique exclusivement en des chemins avec chevauchement et en des chemins avec croisement ;
- À alimenter la tête d'extrusion (6) de la machine d'impression 3D (I) avec une composition (4),
- À piloter la tête d'extrusion selon la trajectoire numérique afin que :
* pour un chemin avec chevauchement, la matière en cours de dépôt chevauche partiellement au moins un bord d'un dépôt de matière antérieurement déposé, par une partie de matière chevauchante présentée dans son épaisseur et ayant une épaisseur strictement inférieure à la hauteur nominale (e) de manière à éviter dans la partie interne de la structure tridimensionnelle crue manipulable, des espaces entre les bords arrondis du dépôt de matière en cours et ceux du dépôt de matière antérieurement déposé,
* pour un chemin avec croisement, la matière en cours de dépôt croise au moins un dépôt de matière antérieurement déposé avec un chevauchement complet dudit dépôt de matière antérieurement déposé, par une partie de matière chevauchante présentée dans son épaisseur et ayant une épaisseur strictement inférieure à la hauteur nominale (e) de manière à éviter dans la partie interne de la structure tridimensionnelle crue manipulable, des espaces entre les bords arrondis du dépôt de matière en cours et ceux du dépôt de matière antérieurement déposé.

2. Procédé selon la revendication 1 selon lequel la tête d'extrusion (6) est montée mobile selon la trajectoire numérique prédéfinie (T) pour effectuer une succession de tours correspondant chacun au chemin parcouru pour retrouver une même position dans le plan horizontal avec une élévation correspondant à une hauteur nominale (e_{N}).

3. Procédé selon la revendication 2, selon lequel on pilote la tête d'extrusion afin que sur au moins un tour, la tête d'extrusion s'élève au moins une fois d'une hauteur intermédiaire qui est une fraction de la hauteur nominale.

4. Procédé selon la revendication 2, selon lequel on pilote la tête d'extrusion afin que sur au moins un tour, la tête d'extrusion se trouve positionnée en différents points du chemin en s'élevant en chaque point d'un incrément de hauteur dont la somme correspond à la hauteur nominale.

5. Procédé selon l'une des revendications 2 à 4, selon lequel on pilote la tête d'extrusion afin que par la succession de tours, la tête d'extrusion s'élève pour bâtir la structure tridimensionnelle crue manipulable (2) conforme au modèle 3D numérique (M), en suivant une trajectoire avec un dépôt de matière (3) ininterrompu du début jusqu'au terme de la construction de la structure tridimensionnelle crue manipulable (2).

6. Procédé selon l'une des revendications 2 à 5, selon lequel on pilote la tête d'extrusion afin qu'au cours de chaque tour, la tête d'extrusion est décalée dans le plan horizontal afin que la matière en cours de dépôt chevauche partiellement un bord d'un dépôt de matière antérieurement déposé.

7. Procédé selon l'une des revendications précédentes, selon lequel, pour un chemin avec croisement, on pilote la tête d'extrusion pour réduire la quantité de matière déposée pour réaliser la partie de matière chevauchante ayant une épaisseur strictement inférieure à la hauteur nominale (e_{N}).

8. Procédé selon l'une des revendications précédentes, selon lequel pour un chemin avec un même chevauchement, on pilote la tête d'extrusion pour conserver constant le débit de matière déposée.

9. Procédé selon l'une des revendications précédentes, selon lequel pour un chemin avec chevauchement, on pilote la tête d'extrusion pour régler sa position dans le plan pour définir le degré de chevauchement de la partie de matière chevauchante sur le dépôt de matière antérieurement déposé.

10. Procédé selon l'une des revendications précédentes, selon lequel pour un chemin avec chevauchement, on règle le débit de la tête d'extrusion en fonction du degré de chevauchement de la partie de matière chevauchante sur le dépôt de matière antérieurement déposé.

11. Procédé selon la revendication 1 selon lequel la tête d'extrusion (6) est montée mobile selon la trajectoire numérique prédéfinie (T) pour effectuer des dépôts de matière en superposition par strates s'élevant chacune d'une hauteur nominale (e).

12. Procédé selon l'une des revendications précédentes, selon lequel la tête d'extrusion est pilotée afin de ménager dans la structure tridimensionnelle crue manipulable (2), au moins un canal de circulation d'un milieu fluide à traiter, possédant une paroi présentant une succession de reliefs arrondis générant des variations de la section de passage du canal, ces reliefs arrondis étant formés par la partie de matière située à l'opposé de la partie de matière chevauchante.

13. Procédé selon l'une des revendications précédentes, selon lequel la tête d'extrusion est configurée de sorte que la partie de matière située à l'opposé de la partie de matière chevauchante, possède un bord arrondi.

14. Procédé selon l'une des revendications précédentes, selon lequel on dispose dans un four de traitement thermique la structure tridimensionnelle crue manipulable (2) afin d'y réaliser une opération de frittage.

15. Procédé de préparation d'une membrane de filtration tangentielle comprenant la fabrication selon l'une quelconque des revendications précédentes d'un support inorganique monolithique poreux (1) dans lequel est ménagé au moins un canal (11) de circulation du milieu fluide à traiter, suivie après le frittage dudit support, d'une étape de création d'au moins une couche séparatrice sur les parois du ou des canaux (11).

16. Support inorganique monolithique poreux (1) ayant une porosité comprise entre 10% et 60% et un diamètre moyen de pores appartenant à la gamme allant de 0,5 µm à 50 µm, ledit support inorganique monolithique poreux possédant une surface extérieure présentant une succession de reliefs périmétriques arrondis (st) et au moins un canal de circulation du fluide à traiter dont la paroi présente des reliefs périmétriques arrondis participant à la génération de turbulences, **caractérisé en ce que** ledit support inorganique monolithique poreux (1) est fabriqué selon l'une quelconque des revendications 1 à 14.

17. Membrane de filtration tangentielle comportant un support inorganique monolithique poreux (1) selon la revendication précédente, pourvu d'au moins un canal (11) de circulation du milieu fluide à traiter, dont la paroi avec des reliefs périmétriques arrondis est revêtue d'au moins une couche séparatrice.

18. Membrane de filtration tangentielle selon la revendication précédente, pour laquelle le profil arrondi des reliefs périmétriques de la paroi du canal (11) persiste pour participer à la création de turbulences dans le canal (11) après le dépôt d'une ou plusieurs couches séparatrices.

## Patentansprüche

1. Verfahren zur Herstellung mindestens eines porösen monolithischen anorganischen Trägers (1), der mindestens einen Kanal für die Zirkulation des zu behandelnden Fluids besitzt und eine Porosität, die zwischen 10 % und 60 % liegt, und einen mittleren Porendurchmesser, der zu dem Bereich gehört, der von 0,5 µm bis 50 µm reicht, aufweist, mittels einer 3D-Druckmaschine (I), umfassend mindestens einen Extrusionskopf (6), der im Raum bewegbar über einer feststehenden horizontalen Platte (5) montiert ist, indem er nacheinander mit einer Nennhöhe (e) entlang einer vordefinierten numerischen Bahn (T) bewegt wird, um übereinanderliegende Materialablagerungen zu bewirken, die jeweils eine Nennbreite und eine Stärke, die zwischen einer unteren Oberfläche und einer oberen Oberfläche definiert ist, aufweisen, wobei die 3D-Druckmaschine die Ablagerung von Material in folgender Form ermöglicht:
- einer Schnur mit abgerundeten Rändern, um an der Wand mindestens eines Zirkulationskanals abgerundete Umfangsreliefs zu schaffen, die an der Erzeugung von Turbulenzen beteiligt sind,
- einer Zusammensetzung (4), um auf der horizontalen Platte (5) ausgehend von der vordefinierten numerischen Bahn (T) Wände einer manipulierbaren rohen dreidimensionalen Struktur (2) aufzubauen, die dazu bestimmt ist, den oder die monolithischen porösen anorganischen Träger (1) zu bilden, **dadurch gekennzeichnet, dass** das Verfahren aus Folgendem besteht:
- bei einer Wand, deren Breite größer ist als die Nennbreite (L) der Materialablagerung, Zerlegen der numerischen Bahn ausschließlich in Wege mit Überlappung und in Wege mit Überschneidung;
- Speisen des Extrusionskopfs (6) der 3D-Druckmaschine (I) mit einer Zusammensetzung (4),
- Steuern des Extrusionskopf gemäß der digitalen Bahn, damit:
* das aktuell abgelagerte Material bei einem Weg mit Überlappung teilweise mindestens einen Rand einer zuvor abgelagerten Materialablagerung durch einen Teil des überlappenden Materials überlappt, der in seiner Stärke vorliegt und eine Stärke aufweist, die strikt kleiner ist als die Nennhöhe (e), um in dem inneren Teil der rohen, manipulierbaren dreidimensionalen Struktur Räume zwischen den abgerundeten Rändern der aktuellen Materialablagerung und denen der zuvor abgelagerten Materialablagerung zu vermeiden,
* das aktuell abgelagerte Material bei einem Weg mit Überschneidung mindestens eine Ablagerung von zuvor abgelagertem Material mit einer vollständigen Überschneidung der Ablagerung von zuvor abgelagertem Material durch einen Teil des überlappenden Materials, der in seiner Stärke vorliegt und eine Stärke aufweist, die strikt kleiner ist als die Nennhöhe (e), überschneidet, um in dem inneren Teil der rohen, manipulierbaren dreidimensionalen Struktur Räume zwischen den abgerundeten Rändern der aktuellen Materialablagerung und denen der zuvor abgelagerten Materialablagerung zu vermeiden,

2. Verfahren nach Anspruch 1, wobei der Extrusionskopf (6) entlang der vorgegebenen numerischen Bahn (T) bewegbar montiert ist, um eine Abfolge von Umdrehungen auszuführen, die jeweils dem zurückgelegten Weg entsprechen, um eine gleiche Position in der horizontalen Ebene mit einer Nennhöhe (e_{N}) entsprechenden Erhebung wiederzuerlangen,

3. Verfahren nach Anspruch 2, wobei der Extrusionskopf gesteuert wird, damit der Extrusionskopf bei mindestens einer Umdrehung mindestens einmal um eine Zwischenhöhe angehoben wird, die ein Bruchteil der Nennhöhe ist.

4. Verfahren nach Anspruch 2, wobei der Extrusionskopf gesteuert wird, damit der Extrusionskopf über mindestens eine Runde an verschiedenen Punkten des Wegs positioniert wird, indem er an jedem Punkt um ein Höheninkrement ansteigt, dessen Summe der Nennhöhe entspricht.

5. Verfahren nach einem der Ansprüche 2 bis 4, wobei der Extrusionskopf gesteuert wird, damit der Extrusionskopf durch die Abfolge von Umdrehungen zum Aufbau der manipulierbaren rohen dreidimensionalen Struktur (2) entsprechend dem digitalen 3D-Modell (M) ansteigt, wobei er einer Bahn mit einer ununterbrochenen Materialablagerung (3) von dem Anfang bis zu dem Ende des Aufbaus der manipulierbaren rohen dreidimensionalen Struktur (2) folgt.

6. Verfahren nach einem der Ansprüche 2 bis 5, wobei der Extrusionskopf gesteuert wird, damit der Extrusionskopf während jeder Umdrehung in der horizontalen Ebene verschoben wird, damit das Material, das aktuell abgelagert wird, teilweise einen Rand einer zuvor abgelagerten Materialablagerung überlappt.

7. Verfahren nach einem der vorherigen Ansprüche, wobei der Extrusionskopf für einen Weg mit Überschneidung gesteuert wird, damit die Menge des abgelagerten Materials zur Herstellung des überlappenden Materialteils mit einer Stärke, die strikt unter der Nennhöhe (e_{N}) ist, reduziert wird,

8. Verfahren nach einem der vorherigen Ansprüche, wobei der Extrusionskopf für einen Weg mit gleicher Überlappung gesteuert wird, damit der Durchsatz des abgelagerten Materials konstant gehalten wird.

9. Verfahren nach einem der vorherigen Ansprüche, wobei der Extrusionskopf für einen Weg mit Überlappung gesteuert wird, damit seine Position in der Ebene eingestellt wird, um den Grad der Überlappung des überlappenden Materialteils mit der zuvor abgelagerten Materialablagerung zu definieren.

10. Verfahren nach einem der vorherigen Ansprüche, wobei der Durchsatz des Extrusionskopfs für einen Weg mit Überlappung abhängig von dem Grad der Überlappung des überlappenden Materialteils mit der zuvor abgelagerten Materialablagerung eingestellt wird.

11. Verfahren nach Anspruch 1, wobei der Extrusionskopf (6) entlang der vordefinierten numerischen Bahn (T) bewegbar montiert ist, um Materialablagerungen in Überlagerungen durch Schichten durchzuführen, die sich jeweils um eine Nennhöhe (e) erheben.

12. Verfahren nach einem der vorherigen Ansprüche, wobei der Extrusionskopf gesteuert wird, um in der dreidimensionalen, rohen, manipulierbaren Struktur (2) mindestens einen Zirkulationskanal für ein zu behandelndes fluides Medium auszubilden, der eine Wand besitzt, die eine Abfolge von abgerundeten Reliefs aufweist, die Variationen des Durchgangsquerschnitts des Kanals erzeugen, wobei diese abgerundeten Reliefs von dem Materialteil gebildet sind, der sich gegenüber dem überlappenden Materialteil befindet.

13. Verfahren nach einem der vorherigen Ansprüche, wobei der Extrusionskopf konfiguriert ist, sodass der Materialteil, der sich gegenüber des überlappenden Materialteil befindet, einen abgerundeten Rand besitzt.

14. Verfahren nach einem der vorherigen Ansprüche, wobei die manipulierbare rohe dreidimensionale Struktur (2) in einem Wärmebehandlungsofen angeordnet wird, um dort einen Sintervorgang durchzuführen.

15. Verfahren zur Herstellung einer tangentialen Filtrationsmembran, umfassend die Herstellung eines porösen monolithischen anorganischen Trägers (1), in dem mindestens ein Kanal (11) zur Zirkulation des zu behandelnden fluiden Mediums bereitgestellt ist, gemäß einem der vorherigen Ansprüche, gefolgt nach Sintern des Trägers von einem Schritt eines Erzeugens mindestens einer Trennschicht auf den Wänden des Kanals oder der Kanäle (11).

16. Poröser monolithischer anorganischer Träger (1), der eine Porosität zwischen 10 % und 60 % und einen mittleren Porendurchmesser, der zu dem Bereich gehört, der von 0,5 µm bis 50 µm reicht, aufweist, wobei der poröse monolithische anorganische Träger eine Außenfläche besitzt, die eine Abfolge von abgerundeten Umfangsreliefs (st) und mindestens einen Zirkulationskanal für das zu behandelnde Fluid aufweist, dessen Wand abgerundete Umfangsreliefs aufweist, die an der Erzeugung von Turbulenzen beteiligt sind,
**dadurch gekennzeichnet, dass** der poröse monolithische anorganische Träger (1) nach einem der Ansprüche 1 bis 14 gefertigt ist.

17. Tangentiale Filtrationsmembran, umfassend einen porösen monolithischen anorganischen Träger (1) nach dem vorherigen Anspruch, der mit mindestens einem Kanal (11) zur Zirkulation des zu behandelnden fluiden Mediums versehen ist, dessen Wand mit abgerundeten Umfangsreliefs mit mindestens einer Trennschicht beschichtet ist.

18. Tangentiale Filtrationsmembran nach dem vorherigen Anspruch, wobei das abgerundete Profil der Umfangsreliefs der Kanalwand (11) bestehen bleibt, um nach der Ablagerung einer oder mehrerer Trennschichten an der Erzeugung von Turbulenzen in dem Kanal (11) mitzuwirken.

## Claims

1. A method for the production of at least one porous monolithic inorganic support (1) having at least one channel for circulating the fluid to be treated and having a porosity comprised between 10% and 60% and a mean pore diameter ranging from 0.5 µm to 50 µm, by means of a 3D printing machine (I) comprising at least one extrusion head (6) mounted moveably in space above a fixed horizontal plate (5), by being successively moved with a nominal height (e) along a predefined numerical trajectory (T) to effect superimposed material depositions each having a nominal width and a defined thickness between a lower surface and an upper surface, said 3D printing machine allowing depositing material in the form of:
- a bead with rounded edges so as to create rounded perimeter reliefs participating in the generation of turbulence on the wall of at least one circulation channel,
- a composition (4) to build, on said horizontal plate (5), from the predefined numerical trajectory (T), walls of a manipulable three-dimensional green structure (2) to form the monolithic porous inorganic support(s) (1), **characterized in that** the method consists of:
- For a wall whose width is greater than the nominal width (L) of the material deposition, to break down the numerical trajectory exclusively into overlapping paths and crossing paths;
- To supply the extrusion head (6) of the 3D printing machine (I) with a composition (4),
- To drive the extrusion head according to the numerical trajectory so that:
* for an overlapping path, the material being deposited partially overlaps at least one edge of a previously deposited material deposition, by an overlapping material part presented in its thickness and having a thickness strictly less than the nominal height (e) so as to avoid, in the inner part of the manipulable three-dimensional green structure, spaces between the rounded edges of the material deposition being deposited and those of the material deposition previously deposited,
* for a crossing path, the material being deposited intersects at least one previously deposited material deposition with a complete overlap of said previously deposited material deposition, by an overlapping material part presented in its thickness and having a thickness strictly less than the nominal height (e) so as to avoid, in the inner part of the manipulable three-dimensional green structure, spaces between the rounded edges of the material deposition being deposited and those of the material deposition previously deposited.

2. The method according to claim 1, according to which the extrusion head (6) is mounted moveably along the predefined numerical trajectory (T) in order to carry out a succession of turns each corresponding to the path travelled in order to find the same position in the horizontal plane with an elevation corresponding to a nominal height (e_{N}).

3. The method according to claim 2, according to which the extrusion head is driven so that, over at least one turn, the extrusion head rises at least once by an intermediate height which is a fraction of the nominal height.

4. The method according to claim 2, according to which the extrusion head is driven so that, over at least one turn, the extrusion head is positioned at different points of the path, rising at each point by a height increment, the sum of which corresponds to the nominal height.

5. The method to one of claims 2 to 4, according to which the extrusion head is driven so that by the succession of turns, the extrusion head rises to build the manipulable three-dimensional green structure (2) in accordance with the 3D digital model (M), following a trajectory with an uninterrupted material deposition (3) from the beginning to the end of the construction of the manipulable three-dimensional green structure (2).

6. The method according to any one of claims 2 to 5, according to which the extrusion head is driven so that, during each turn, the extrusion head is offset in the horizontal plane so that the material being deposited partially overlaps an edge of a deposition of previously deposited material.

7. The method according to one of the preceding claims, according to which, for a crossing path, the extrusion head is driven to reduce the quantity of material deposited to produce the overlapping material part having a thickness strictly less than the nominal height (e_{N}).

8. The method according to one of the preceding claims, according to which, for a path with the same overlap, the extrusion head is driven to keep the flow rate of deposited material constant.

9. The method according to one of the preceding claims, according to which, for an overlapping path, the extrusion head is driven to adjust its position in the plane to define the degree of overlap of the overlapping material part on the previously deposited material deposition.

10. The method according to one of the preceding claims, according to which, for an overlapping path, the flow rate of the extrusion head is adjusted according to the degree of overlap of the overlapping material part on the previously deposited material deposition.

11. The method according to claim 1, according to which the extrusion head (6) is mounted moveably along the predefined numerical trajectory (T) in order to carry out superimposed material depositions in strata each rising by a nominal height (e).

12. The method according to one of the preceding claims, according to which the extrusion head is driven so as to provide in the manipulable three-dimensional green structure (2), at least one channel for circulating a fluid medium to be treated, possessing a wall having a succession of rounded reliefs generating variations in the passage section of the channel, these rounded reliefs being formed by the part of material situated opposite the overlapping material part.

13. The method according to one of the preceding claims, according to which the extrusion head is configured so that the part of the material located opposite the overlapping material part has a rounded edge.

14. The method according to one of the preceding claims, according to which the manipulable three-dimensional green structure (2) is placed in a heat treatment furnace in order to carry out a sintering operation.

15. A method for the preparation of a tangential filtration membrane comprising the manufacture according to any of the preceding claims of a porous monolithic inorganic support (1) in which is provided at least one channel (11) for circulating the fluid medium to be treated, followed, after the sintering of said support, by a step of creating at least one separating layer on the walls of the channel or channels (11).

16. A porous monolithic inorganic support (1), having a porosity comprised between 10% and 60% and a mean pore diameter ranging from 0.5 µm to 50 µm, said porous monolithic inorganic support possessing an outer surface having a succession of rounded perimeter reliefs (st) and at least one channel for circulating the fluid to be treated whose wall has rounded perimeter reliefs participating in the generation of turbulence, **characterized in that** said porous monolithic inorganic support (1) is manufactured according to any one of claims 1 to 14.

17. A tangential filtration membrane comprising a porous monolithic inorganic support (1) according to the preceding claim, provided with at least one channel (11) for circulating the fluid medium to be treated, whose wall with rounded perimeter reliefs is coated with at least one separating layer.

18. A tangential filtration membrane according to the preceding claim, wherein the rounded profile of the perimetric reliefs of the inner wall of the channels (11) remains to participate in the creation of turbulence in the channel (11) after the deposit of one or more separating layer(s).
